# EUROPEAN PATENT SPECIFICATION

(11) **EP 3 691 848 B1**
(45) Date of publication and mention of the grant of the patent: **29.07.2026**
(21) Application number: 18864519.6
(22) Date of filing: 02.10.2018
(51) Int. Cl.: B27N 3/10, B27N 1/02, B27N 1/00, B27N 3/00, C08L 97/02, B27N 3/04

(54) **LIGNIN REINFORCED ADHESION OF WOOD COMPOSITES PANEL PRODUCTS**
LIGNINVERSTÄRKTE HAFTUNG VON HOLZVERBUNDPLATTENPRODUKTEN
ADHÉRENCE RENFORCÉE PAR DE LA LIGNINE DE PRODUITS DE PANNEAUX COMPOSITES EN BOIS

(30) Priority: 02.10.2017 US 201762566776 P
(43) Date of publication of application: 12.08.2020
(73) Proprietor: FPInnovations, Pointe-Claire, Québec H9R 3J9 (CA)
(72) Inventor: W. FENG, Martin, Vancouver, British Columbia V6P 1W6 (CA); KOUISNI, Lamfeddal, St-Leonard, Québec H1P 2Z2 (CA); PALEOLOGOU, Michael, Beaconsfield, Québec H9W 6E5 (CA); PARADIS-BOIES, Simon, Saint-Henri, Québec G0R 3E0 (CA); RAYMOND, Stéphan, Québec, Québec G3J 1V3 (CA); ZHANG, Yaolin, Quèbec, Québec G1W 0A6 (CA); HUANG, Zeen, Vancouver, British Columbia V5Z 1R6 (CA)
(74) Representative: Germain Maureau
(86) International application number: PCT/CA2018/051237
(87) International publication number: WO 2019/068180

(56) References cited:
- EP-A1- 2 420 616
- WO-A1-82/01507
- DE-A1- 102015 107 321
- US-A- 4 279 788
- US-A- 4 414 361
- US-A- 4 892 618
- US-A- 4 892 618
- US-A- 5 093 058
- US-A- 5 750 201
- US-A1- 2015 210 904
- US-A1- 2015 315 439
- US-B2- 9 505 964

## Description

### CROSS-REFERENCE TO RELATED APPLICATIONS

This application claims priority from U.S. provisional application Serial Number 62/566,776 filed on October 2, 2017.

### TECHNICAL FIELD

It is a process to modify lignocellulosic materials with lignin, and incorporating lignin and isocyanates wood adhesive in wood products compositions.

### BACKGROUND

The composite wood products are structural or non-structural panels commonly used in constructing walls, floors, roofs, doors, cabinets, furniture, and architectural moldings. The most common wood composite panel products are: plywood, oriented strand board (OSB), particleboard (PB), and fiberboards of different densities [low density fiberboard (LDF), medium density fiberboard (MDF) and high density fiberboard (HDF)]. The main wood adhesives currently used are: formaldehyde-based resins, such as urea-formaldehyde (UF), melamine-formaldehyde (MF), melamine-urea-formaldehyde (MUF) resorcinol-formaldehyde (RF), phenol-resorcinol-formaldehyde (PRF) and phenol-formaldehyde (PF) resins, and formaldehyde-free resins, such as polymeric methylene diphenyl diisocyanate (pMDI). Formaldehyde-based resins for wood applications are thermoset-type resins. Before curing, they contain a certain free formaldehyde content in the resin system. After curing, most of the free formaldehyde either reacts with other components of the resin system or evaporates from the panels. Thus only a small amount of free formaldehyde is trapped in the panels. After curing, the structures of PF, RF, PRF, and MF are quite stable. No further free formaldehyde is generated from these cured resins, and free formaldehyde emissions from the panels are reduced over time. However, since the chemical structure of cured UF is not stable at highly humid conditions, the cured UF generates free formaldehyde under such conditions.

The resin systems for most wood composite panel products (e.g. OSB, PB and MDF) usually include a resin (e.g. UF, PF, pMDI etc.) and wax. The function of wax in wood composites is to reduce the water absorption of wood composite panels and improve the dimensional stability. However, wax does not contribute to bonding. On the contrary, it weakens the bonding if it is present in between the wood furnish particles. Each type of wood composite panel has different requirements for the resin applied. For OSB panel manufacture, the resin viscosity should be below 500cps, usually 150-300cps. For PB board and MDF board manufacture, the resin viscosity should be less than 1000cps. If the resin viscosity is high, certain measures need to be taken to adjust the resin application system to make sure that the resin is applied evenly and is well-distributed on the surface of the wood furnish.

Wood is composed of three main components: cellulose, (about 40-50%), hemicellulose (about 20-30%) and lignin (about 20-30%). Lignin is a very significant component of all lignocellulosic materials, including wood. As a macromolecule, lignin is polyphenolic and amorphous, contributing greatly to the natural properties of wood. Conceivably, wood properties can be significantly modified or enhanced if additional lignin content can be introduced to wood, which would lead to new or improved wood products as well as various economic and environmental benefits.

Several hypotheses can be made on how lignin might reinforce adhesion in wood composite panels: 1) lignin incorporated into such products helps develop strong physical interactions between lignocellulosic materials during the thermal treatment steps of the panel-making process thus leading to adhesion between lignocellulosic materials, and 2) lignin associates with different resin systems (e.g. isocyanates, phenolic resins, and/or urea-formaldehyde resins with wax) via different mechanisms (e.g. chemical reaction) to reinforce the adhesion among lignocellulosic materials.

The first hypothesis stated above can be justified based on the following. Usually, during the manufacture of wood composite panels, the moisture content of resinated lignocellulosic materials (wood furnish) is about 6-15%, preferably 8-12%. Furthermore, the pressing temperature is about 180-225°C. When additional lignin is incorporated into lignocellulosic materials at a dosage of about 0-10wt% based on dry wood weight, or preferably 0.25-3wt%, this lignin is expected to associate with water molecules (e.g. through hydration of ionic groups or hydrogen bonding) to form some kind of a lignin-water complex. As known in the art, the glass transition temperature of softwood lignin is about 140-170°C in the dry form, while the glass transition temperature of hardwood lignin is about 110-140°C in the dry form. The glass transition temperature, Tg, is the temperature at which a polymer changes from a rigid plastic (below Tg) to a flexible, rubbery material (above Tg). As also known, when lignin is in the moist form and/or in the presence of other wood components (e.g. cellulose, hemicellulose), the glass transition temperature decreases significantly by as much as 100°C. Hence, through this mechanism (co-current softening of added lignin as well as lignin in the lignocellulosic material), it is expected that during the wood composites manufacturing process, the added lignin could establish strong physical interactions with the lignin in the lignocellulosic materials since the latter are composed of about 20-30wt% lignin. As a result, a strong adhesion is expected to develop among lignocellulosic materials and lignin during panel making since the temperatures to which the moist lignin is exposed are in the same range as the glass transition temperature of the moist lignin (the platen temperature could be more than 180°C while the core temperature of lignocellulosic materials is usually higher than 130 or 140°C). After the panels are cooled down, the lignin is expected to solidify (rigid plastic form) thereby creating a permanent adhesion between the lignocellulosic materials (e.g. wood particles used).

The second hypothesis stated above can be justified based on the following. Depending on the resin system used (e.g. isocyanate resin, phenolic resin, urea-formaldehyde resin with wax), lignin would reinforce adhesion among lignocellulosic materials through a different mechanism. For example, the case of three different resin systems is discussed below.

### A) Isocyanate resin system (usually pMDI plus wax)

When isocyanates, in particular pMDI (NCO content about 30% by weight), are used in lignocellulosic materials panel manufacture, the dosage of pMDI is less than 5wt% based on dry weight of the lignocellulosic materials, and most commonly 2-3wt%. If, for example, in such adhesive system, one has 3wt% lignin, 3wt% pMDI, and 8wt% moisture (based on dry weight of lignocellulosic materials before pressing), the weight ratio of lignin, pMDI and water would be 3:3:8. The functional group molar ratio would be different from the weight ratio. The hydroxyl group content of lignin is usually between 200 and 300 mgKOH/g. This means that 100 grams of lignin contain 0.356-0.534 moles of hydroxyl groups which could react with the NCO groups in isocyanates. pMDI usually contains an NCO content of 30wt%, resulting in 0.714 mole of NCO groups in 100 g of pMDI. The hydroxyl group content in 100 g of water would be 11.11 moles. Hence, at a weight ratio of 3:3:8 of lignin: pMDI:water, the functional group molar ratio of OH in lignin: NCO groups in pMDI: OH groups in water would be 0.356-0.534:0.714: (11.11x 8/3)=0.356-0.534:0.714:29.629 = 1.0-1.5:2.0:83. As seen from these relative molar ratios, the -OH (hydroxyl) groups in water are much higher than the -OH groups in lignin. The relative reactivity of isocyanates with "OH" groups under uncatalyzed conditions at 25°C is as follows: 100 for primary hydroxyl groups (RCH₂-OH), 100 for water (HOH), 40 for carboxylic acid hydroxyl groups (RCOOH), 30 for secondary hydroxyl groups (RR'CH-OH), and 0.5 for tertiary hydroxyl groups (RR'R"C-OH). The relative reactivity of isocyanates with amines and derivatives are as follows: 100,000 for primary aliphatic amines (R-NH₂), 20,000-50,000 for secondary aliphatic amines (RR'NH), 200-300 for primary aromatic amines (Ar-NH), 15 for ureas (R-NH-CO-NH-R), 0.3 for urethanes (R-NH-CO-O-R), and 0.1 for amides (RCO-NH₂). If it is assumed that all OH (hydroxyl) groups are primary hydroxyl groups (this is not the case in lignin), the reactivity of -OH groups in lignin with NCO groups in isocyanates would be similar to -OH groups in water with NCO groups in isocyanates at similar concentrations. Due to the functional group molar ratio of -OH in lignin, NCO in pMDI and -OH in water of 1.0-1.5:2.0:83.1, one would expect much more OH groups from water reacting with NCO groups in pMDI than OH groups from lignin reacting with NCO groups in pMDI. Hence, only a very small portion of pMDI is expected to react with the OH groups in lignin to form polyurethane bonds. The most dominant reaction is likely to be OH groups in water reacting with NCO groups in pMDI to form unstable intermediate structures, further forming amines and CO₂ as shown below:

*H*₂*O* + *R - NCO* → [*RNHCOOH*] → *CO*₂ *+ RNH*₂

The amines will further react with NCO groups to form (*RNH*)₂*CO.* In lignocellulosic material panels with pMDI and lignin, only a small portion of lignin is likely to react with pMDI to crosslinked structures in the panel leading to adhesion. Most of the lignin is expected to have a strong physical interaction with lignocellulosic materials leading to adhesion of lignocellulosic materials and reinforcement of lignocellulosic material panels.

### B) Phenolic resin system (usually phenolic resin plus wax)

When phenol-formaldehyde resins are used as an adhesive in lignocellulosic materials panels manufacture, the dosage of phenolic resin is less than 5wt% (based on dry weight of lignocellulosic materials) and mostly commonly about 3wt% or less. These panels are usually pressed at about 130-150°C in the case of plywood and at about 170-180°C in the case of OSB. Under these conditions, a portion of the lignin is expected to participate in the phenolic resin curing reaction and be part of the crosslinked structure of phenolic resins in the panels made. Wax could be partially or totally replaced by lignin. Because lignin establishes physical adhesion with lignocellulosic materials, and also participates in the curing reaction with phenolic resin, the lignocellulosic material panels made with phenolic resin and lignin can perform as well or better than those made with phenolic resin and wax.

### C) Urea-formaldehyde system (usually urea-formaldehyde resin plus wax)

When urea-formaldehyde resins are used in lignocellulosic materials panel manufacture, the dosage of urea-formaldehyde resin is in the range of 6-14wt% (based on dry weight of lignocellulosic materials), and commonly 8-12wt%. Due to the reaction mechanism in this resin system, lignin may not participate in the urea-formaldehyde curing reaction during panel making.

There is presently a growing demand for lowering formaldehyde emissions from composite wood and/or paper products used in buildings. pMDI and polyurethane adhesives (formaldehyde free) for wood products application have increased significantly, especially in OSB manufacture. Isocyanates containing binder and adhesives account for about 10% of the market share by volume in wood adhesives in North America.

Polyurethanes (PU) are considered as one of the most versatile polymeric materials offering a wide range of products with various applications. PU products can be divided into three categories: flexible foams, rigid foams, and others which include coatings, adhesives and binders, sealants, elastomers etc. In recent years, the use of formaldehyde-free adhesives and binders and more specifically, isocyanate- and bio-based adhesives has increased significantly in wood and wood products applications.

Addition of bio-based products, especially lignocellulosic-based products into polymeric systems is a very common and effective approach to produce materials with higher mechanical properties and more eco-friendly characteristics. Therefore, a significant effort has been invested in incorporating lignin in several lignin-based polyurethane applications (adhesives, foams, and binders) since it has a variety of functional groups in its structure, and, in particular, different types of hydroxyl groups.

U.S. Patent 4,317,752 describes a process for the production of polyisocyanate lignin-cellulose plastics. In the first step, wood sawdust is cooked with sodium hydroxide at a temperature between 150°C and 220°C producing a brown, thick liquid which solidifies on cooling and is ground into a powder. In a second step, the ground powder is mixed with polyisocyanates (such as toluene diisocyanate or TDI in a ratio of 1:1 by weight, methylene diphenyl diisocyanate or MDI in the ratio of 2:3), agitated for 10-60 minutes at a temperature of 20-70°C, thereby, producing a polyisocyanate-lignin-cellulose prepolymer. In a third step, curing agent (such as water, water-containing catalysts such as tertiary amines, organometallic compounds etc. and organic additives such as alcohols, aldehydes, carboxylic acids, carboxylic acid chlorides, esters, ethers, ketones are added and mixed into the polyisocyanate-lignin-cellulose pre-polymer to produce semi-rigid or rigid cellular products.

U.S. Patent 4,486,557 discusses the development of binder formulations which comprise di- or poly-isocyanate (20-95 wt.%) (such as MDI), a liquid epoxide (5-80% wt.), and lignin (1.0-60%wt.) as diluent. It is suggested that these formulations be used as a binder for manufacturing lignocellulosic boards.

U.S. Patent 5,750,201 discusses the development of a process for binding lignocellulosic materials using polyisocyanates in combination with lignin solvents and lignin. The lignin solvents, particularly cyclic urea are used in amounts ranging from 0.1 to 6.0wt% based on the weight of polyisocyanate. The lignin used was organosolv lignin, and the amount added in the ranged from 1wt% to 5wt% based on the polyisocyanate.

Patent application CA 2,164,467 and patent application CA 2,164,490 discuss the incorporation of lignin into isocyanate to produce lignin-isocyanate pre-polymer for use in polyurethanes. A few steps to prepare the lignin-based isocyanate pre-polymer mixture are disclosed, mainly: 1) lignin powder (kraft lignin or organosolv lignin) is added and stirred into PPG or PEG; 2) the water in the mixture is removed for several hours at 60-150°C under vacuum; 3) dewatered lignin suspension is slowly metered in and stirred into isocyanate heated at 80°C and kept at 80-120°C for 2 hours to complete the reaction. The viscosity of the lignin-containing pre-polymer mixtures is strongly dependent on the lignin type as well as the polyisocyanate structure. After storage for 60 days at 50°C, the pre-polymer mixtures did not convert to gel, which indicated that the pre-polymer mixtures are quite stable. Polyurethane foam is produced by mixing the lignin-based isocyanate pre-polymer mixture and polyol containing blowing agent, catalyst, surfactant, chain extender, crosslinker and other additives (such as fire retardant).

Patent application WO 2011/097719 describes a method for the preparation of binders (lignin-based isocyanate binder and lignin-based phenol-formaldehyde resin). For lignin-based isocyanate binder, powder lignin is dissolved in a solvent (e.g. acetone), MDI is added and most of the solvent is removed via vacuum distillation. Lignin could also be directly mixed with MDI. The viscosity of the mixture of MDI-lignin is dependent on the lignin content in the mixture, and increases with time.

Patent application WO 97/24362 discloses a method to incorporate lignin into polyol and then react with isocyanate to form a polyurethane product. Lignin is mixed with polyether polyol under agitation, then heated to around 90°C and agitated to improve the rate of dissolution/dispersion. The resultant solution of lignin-polyol could be used for making thermoset urethane parts, rigid foams, or coatings by adding isocyanate, catalyst and other additives.

Patent application CN 104449501 discloses wood adhesive formulations comprising 0-90% furfural, 0-70% lignin and 10-100% of polyisocyanate, preferably 5 to 75% furfural, 5-50% of lignin and 20-90% polyisocyanate. The 2-ply plywood made with 70-40% furfural/10-40% lignin/ 20% pMDI at 150°C for 180 sec had comparable shear strength as the ones prepared by using phenol-formaldehyde resin under dry and wet conditions (after 48-hour soaking).

Patent application CN 104449528A developed lignin-containing adhesives comprising 20-25% lignin, 50-60% toluene diisocyanate, 10-12% thickening agent (such as rosin), and water.

U.S. Patent 3,072,634 describes an isocyanate-lignin product obtained by reacting isocyanates, such as butyl isocyanate, phenyl isocyanate, with lignin, such as Indulin A, with/without solvent at a temperature ranging from 75 to 110°C.

U.S. Patent 3,577,358 developed methods to produce lignin-isocyanates for plastics, adhesives, flexible and rigid foams. They used several approaches to introduce lignin into isocyanates: 1) lignin was dissolved in a solvent (such as 1,4-dioxane, diethylene glycol monolaurate), then reacted with polyisocyanate (such as diphenyl methane-4,4'-diisocyanate (MDI), 80% 2,4-tolylene diisocyanate/20% 2, 6-tolylene diisocyanate (TDI) at an elevated temperature and with/without catalyst (such as triethanolamine); 2) lignin was dispersed in polyalkylene glycol (e.g. polyethylene glycol with average MW of 400), mixed polypropylene-ethylene glycol), and then reacted with polyisocyanate (such as diphenyl methane-4,4'-diisocyanate, 80% 2,4-tolylene diisocyanate/20% 2, 6-tolylene diisocyanate); and 3) lignin was directly dispersed in polyisocyanate (such as 80% 2,4-tolylene diisocyanate & 20% 2, 6-tolylene diisocyanate), and then reacted at elevated temperatures (e.g. 10 minutes at 70°C or 7 minutes at 120°C).

Glasser et al. (1982) "Hydroxy Propylated Lignin-Isocyanate Combinations as Bonding Agents for Wood and Cellulosic Fibers", The Journal of Adhesion, 14:3, 233-255, published research work relating to the use of hydroxy propylated lignin (kraft lignin and steam explosion lignin) and isocyanate combinations as wood adhesives in particleboard manufacture. They showed that at 25wt% replacement of pMDI with modified lignin, the bending strength dropped more than 50% from ~1300 psi to ~550 psi.

More recently, U.S. Patent 9,598,529 disclosed the production of lignin-based polyurethane products. In a first step, the lignin was mixed with isocyanates. Depending on the final product, other additives such as fire retardant, foaming agent, polyol, surfactant, catalyst and blowing agent could be added. To make wood composites, a few steps were taken: 1) dried lignin and isocyanate were mixed in a ratio of 1:2 by weight; 2) the mixture was added to the wood particles at a 1:2 weight ratio; 3) the resulting mixture of wood particles and isocyanate-lignin was molded in the press and kept in the oven overnight at 70°C; 4) after cooling to room temperature, wood composites were released from the press.

Accordingly, several attempts have been made in the past to incorporate lignin into polyisocyanate to make polyurethane products. However, most of the approaches described above have one or more disadvantages which have prevented them from reaching the commercial stage. Such disadvantages include but are not limited to: 1) in the cases in which an organic solvent is used for the mixing/dispersion of lignin and isocyanate, provisions must be made for the solvent to be removed and recovered - this renders such approaches quite expensive, wherein in addition, the resulting mixture might still need to be further mixed; 2) in the cases in which the lignin is solubilized/dispersed into a polyester polyol or polyether polyol prior to mixing with the polyisocyanate, the stability of the resulting mixture appears to be limited; and 3) in the cases in which the lignin is solubilized/dispersed directly into the polyisocyanate, the applicability of this approach appears to be limited to polyurethane foams. In addition, in such cases, the lignin-isocyanate mixture is not very stable and the viscosity reaches very high levels especially with high lignin content in the mixture (20-30% by weight). As a result, once added to the fiber or wood furnish, it can polymerize prematurely and non-uniformly leading to plugging and other problems especially at elevated temperatures.

Isocyanates (including pMDI) are a class of chemicals that have some of the most diverse industrial applications. When they are allowed to react with polyols, polyurethane products are formed, such as polyurethane adhesives, polyurethane foams, etc. A polyol can be any chemical that contains hydroxyl groups in the molecular structure, such as ethylene glycol, sugar, lignin, cellulose, etc. Even water can be considered as a polyol.

Isocyanates can also react with themselves to form uretidinedione via dimerization (dimer), isocyanurate via trimerization (trimer), carbodiimide etc. Diisocyanate (such as MDI) reactions are usually much more complicated than monoisocyanate reactions.

US5093058A discloses a method of manufacturing fiberboards from cellulosic fibers in a system for mixing an isocyanate resin with a diluent for application in a dry fiberboard manufacturing process.

There is thus still a need to be provided with methods of incorporating lignin into lignocellulosic materials to enable the manufacture of lignin-based lignocellulosic materials panels (such as wood composites panels and other products) with isocyanate containing wood adhesive without the problems encountered in the prior art.

### SUMMARY

The invention is defined by the features of appended claim 1.

It is provided a process of producing a wood product comprising: blending a wood material with lignin, isocyanate or other adhesive and partial or no wax producing a resinated material; forming a mat from the resinated material; and compressing or molding the mat producing a wood product at elevated temperature.

In line with the invention, the wood material and lignin are first blended in a blender producing a wood material-lignin mixture; the wood material-lignin mixture flowed into a digester compressing the wood material-lignin mixture; cooking the compressed wood material-lignin mixture by injection of pressure steam; refining the compressed wood material-lignin mixture producing refined fibers; and blending the refined fibers with isocyanate and partial or no wax producing the resinated material.

In another embodiment, the process described herein comprises incorporating the lignin to the wood material through a plug-screw producing a wood material-lignin mixture; the wood material-lignin mixture flowed into a digester compressing the wood material-lignin mixture; cooking the compressed wood material-lignin mixture by injection of pressure steam; refining the compressed wood material-lignin mixture producing refined fibers; and blending the refined fibers with isocyanate and partial or no wax producing the resinated material.

In an embodiment, the wood material is flown through a plug-screw compressing the wood material; the compressed wood material flowed into a digester wherein the lignin is incorporated producing a compressed wood material-lignin mixture; cooking the compressed wood material-lignin mixture by injection of pressure steam; refining the compressed wood material-lignin mixture producing refined fibers; and blending the refined fibers with isocyanate and partial or no wax producing the resinated material.

In a further embodiment, the wood material is flown through a plug-screw compressing the wood material; the compressed wood material flowed into a digester; cooking the compressed wood material by injection of pressure steam; incorporating the lignin to the compressed wood material producing a compressed wood material-lignin mixture; refining the compressed wood material-lignin mixture producing refined fibers; and blending the refined fibers with isocyanate and partial or no wax producing the resinated material.

In an embodiment, the wood material is flown through a plug-screw compressing the wood material; the compressed wood material flowed into a digester; cooking the compressed wood material by injection of pressure steam; refining the compressed wood material producing refined fibers; incorporating the lignin to the refined fibers through a blow-line producing a refined fibers-lignin mixture, blending the refined fibers-lignin mixture with isocyanate and partial or no wax producing the resinated material.

In another embodiment, the wood material is flown through a plug-screw compressing the wood material; the compressed wood material flowed into a digester; cooking the compressed wood material by injection of pressure steam; refining the compressed wood material producing refined fibers; blending the refined fibers to the isocyanate and partial or no wax producing a mixture of refined fibers-isocyanate; drying the mixture of refined fibers-isocyanate; and blending lignin to the mixture of refined fibers-isocyanate producing the resinated material.

In line with the invention, the pressure steam is at a temperature between 130-190°C.

In another embodiment, the wood material is wood chips or wood sawdust.

In a further embodiment, the wood product is an insulation board and/or a molded product.

In another embodiment, the wood product is a low-density insulation board, a medium-density fiberboard (MDF), a high-density fiberboard (HDF), a fiber-based insulation board, a paper product, or a non-wood lignocellulosic board.

In another embodiment, the wood product is particleboard (PB), an Oriented Strand Board (OSB), a bark board, or a non-wood lignocellulosic board.

In an embodiment the lignin is in a powder form or in suspension.

In an further embodiment the lignin is kraft lignin, soda lignin, hydrolysis lignin, lignosulfonate, organosolv lignin, dioxane acidolysis lignin, milled-wood lignin, or klason lignin.

In another embodiment wherein the wood material is in the form of a wood particle, and the wood adhesive is urea-formaldehyde resin or phenol-formaldehyde resin or isocyanate resin to produce particleboard.

In an embodiment, the wood material is in the form of wood strands, in which the individual strips are around 2.0-2.5 cm × 10-15 cm, and the wood adhesive is phenol-formaldehyde resin or isocyanate resin to produce OSB panel.

It is also provided a process of producing a wood product comprising blending wood chips with lignin in a blender producing a wood chips-lignin mixture; flowing the chips-lignin mixture through a plug-screw compressing the wood chips-lignin mixture; flowing into a digester the compressed wood chips-lignin mixture; cooking the compressed wood chips-lignin mixture with injection of pressure steam; refining the compressed wood chips-lignin mixture producing refined fibers; adding isocyanate and partial or no wax to the refined fibers producing a mixture of isocyanate-refined fibers; drying the mixture of isocyanate-refined fibers producing dry resinated fibers; forming a mat from the dry resinated fibers; and compressing or molding the mat producing the wood product.

In another embodiment, a process of producing a wood product comprising blending wood chips with lignin; flowing the wood chips and lignin mixture through a plug-screw and compressing the wood chips and lignin producing a compressed wood chips-lignin mixture flowing into a digester the compressed wood chips-lignin mixture; cooking the compressed wood chips-lignin mixture with injection of pressure steam, refining said compressed wood chips-lignin mixture producing refined fibers; adding isocyanate and partial or no wax to the refined fibers producing a mixture of isocyanate-refined fibers; drying the mixture of isocyanate-refined fibers producing dry resinated fibers; forming a mat from the dry resinated fibers; and compressing or molding the mat producing the wood product.

In another embodiment, a process of producing a wood product comprising blending wood chips; flowing the wood chips through a plug-screw and compressing the wood chips; flowing into a digester the compressed wood chips wherein the lignin is incorporated producing a compressed wood chips-lignin mixture; cooking the compressed wood chips-lignin mixture with injection of pressure steam; refining the compressed wood chips-lignin mixture producing refined fibers; adding isocyanate and partial or no wax to the refined fibers producing a mixture of isocyanate-refined fibers; drying the mixture of isocyanate-refined fibers producing dry resinated fibers; forming a mat from the dry resinated fibers; and compressing or molding the mat producing the wood product.

It is further provided a process of producing a wood product comprising: blending wood chips; flowing the wood chips through a plug-screw and compressing said wood chips; flowing into a digester the compressed wood chips; cooking the compressed wood chips with injection of pressure steam and subsequently incorporating the lignin to the compressed wood chips producing a wood chips-lignin mixture; refining the compressed wood chips-lignin mixture producing refined fibers; adding isocyanate and partial or no wax to the refined fibers producing a mixture of isocyanate-refined fibers; drying the mixture of isocyanate-refined fibers producing dry resinated fibers; forming a mat from the dry resinated fibers; and compressing or molding the mat producing the wood product.

It is also provided a process of producing a wood product comprising blending wood chips; flowing the wood chips through a plug-screw and compressing the wood chips; flowing into a digester said compressed wood chips; cooking the compressed wood chips with injection of pressure steam; refining the compressed wood chips producing refined fibers; incorporating the lignin to the refined fibers through a blow-line producing a refined fibers-lignin mixture; adding isocyanate and partial or no wax to the refined fibers-lignin mixture producing a mixture of isocyanate-refined fibers; drying the mixture of isocyanate-refined fibers producing dry resinated fibers; forming a mat from the dry resinated fibers; and compressing or molding the mat producing the wood product.

In a further embodiment, it is provided a process of producing a wood product comprising blending wood chips; flowing the wood chips through a plug-screw and compressing the wood chips; flowing into a digester the compressed wood chips; cooking the compressed wood chips with injection of pressure steam; refining the compressed wood chips producing refined fibers; adding isocyanate and partial or no wax to the refined fibers producing a mixture of isocyanate-refined fibers; drying the mixture of isocyanate-refined fibers producing dry resinated fibers; blending lignin to the dry resinated fibers producing a resinated material; forming a mat from the dry resinated material; and compressing or molding the mat producing the wood product.

In an embodiment, it is also provided a lignocellulosic material produced by the process described herein.

### BRIEF DESCRIPTION OF THE DRAWINGS

Reference will now be made to the accompanying drawings.
Fig. 1 presents in (A) a known process for producing fiber boards using pMDI; in (B) a process in accordance to an embodiment of the present disclosure for producing fiber boards; in (C) a known process for producing particleboards or OSB; and in (D) a process in accordance to another embodiment of the present disclosure for producing particleboards or OSB.
Fig. 2 illustrates a press cycle diagram.

### DETAILED DESCRIPTION

In accordance with the present disclosure, there is provided lignin-isocyanate wood products, their composition, preparation and bonding.

Disclosed herein are wood compositions and methods for making wood compositions, and wood products.

The wood compositions described herein comprise lignin, derived from a variety of natural resources, isocyanate compounds containing two or more isocyanate functional groups and suitable dispersing agents. Other materials may be added as catalysts to promote the isocyanate and polyurethane reactions in the described compositions. "Lignin" generally refers to a group of phenolic polymers that give strength and rigidity to plant materials. Lignins are complex polymers, and tend to be referred to in generic terms. Lignins may include, any one or more of several possible industrial lignin preparations, such as kraft lignin, a by-product of the kraft pulping process, soda lignin, a by-product of the soda pulping process, lignosulfonates, a by-product of the sulphite pulping process, and organosolv lignin, a by-product of a bio-ethanol and/or other solvent process, and other lignin preparations, such as dioxane acidolysis lignin, milled-wood lignin, klason lignin, etc. Lignin also as used herein also encompasses other phenolic polymers produced by the chemical, thermochemical or enzymatic treatment of lignocellulosic materials (e.g. wood) to produce sugar-based chemicals and lignin. One such example is hydrolysis lignin produced by the process described in U.S. patent application 2011/0143411 which involves the alkaline treatment of wood, disc refining and the enzymatic treatment of the resulting biomass to break down the carbohydrate portion of the wood furnish. The residual biomass from this process is composed mostly of lignin and carbohydrates chemically and/or physically attached to the lignin.

"Lignin component" represents any lignin-containing material. The lignin component can be derived from industrial lignin preparations or other lignin preparations, which originate from renewable resources, especially from lignocellulosic materials. The lignin component can be a material or a composition, which incorporates modified, treated or purified portions of lignin, such as oxypropylated lignin.

As described herein, lignin is used in the preparation of fiber products (e.g., medium-density fiberboard (MDF), high-density fiberboard (HDF), fiber-based insulation boards and potentially paper products) as well as wood products such as particleboard (PB) and oriented strand board (OSB), etc. (bark board, nonwood lignocellulosic board) by using a novel approach according to an embodiment described herein depending on the final product. Therefore, the described method herein is not based on mixing lignin with solvents and/or isocyanates which requires pumps, tanks, and mixers for the preparation of the solution/mixture and can lead to several problems such as: high viscosity in the case of the dissolution of lignin in polyols; pumping and plugging issues in the case of the preparation of the lignin-isocyanate mixture due to the high viscosity of the mixture and its potential prepolymerization (more specifically, during the addition of the mixture to the blow line for the manufacturing of MDF); and short shelf life of the mixture due to the reaction of moisture in lignin and lignin itself with isocyanates over time.

Accordingly, it is provided a method to improve properties (such as water resistance and dimensional stability) of medium-density fiberboard (MDF), particleboard, OSB board and/or other wood products through incorporation of lignin at different stages of production of such panels or wood products other than as an integrated formulation of wood adhesives (such as lignin-pMDI complex). The direct reaction or polymerization between lignin and wood adhesives (such as pMDI) is avoided before lignin and wood adhesive are applied and mixed with lignocellulosic materials to form the uniform resinated lignocellulosic materials. Such reaction should occur after the formation of the mat of resinated lignocellulosic materials and during the mat pressing in the press at elevated temperature. The wood products encompassed herein do not require any additional adhesives (e.g. epoxides) found in the prior art;

For fiberboard manufacture dry process, lignin can be incorporated at different locations of the process: 1) at the beginning of the process by blending with the raw materials, such as wood chips or saw dust prior to the refiner , in order to modify the fibers by the lignin, leading to reduced requirements for pMDI resin and/or wax. Modifying wood fibers with lignin using the methods described herein helps create several new opportunities for saving chemicals (e.g. pMDI and wax) in the manufacture of fibreboards (e.g. MDF) and/or low density insulation boards. The methods described herein is also applicable to other resin systems (other than pMDI) such as for example phenol-formaldehyde, and/or urea-formaldehyde resin systems to reduce wax consumption. 2) Lignin can also be incorporated between raw material bin feeder and plugscrew. 3) Lignin can also be directly incorporated into the digestor. 4) Lignin can also be incorporated between the digestor and refiner. 5) Lignin can also be incorporated at the blowline after refiner. Finally 6) Lignin can also be incorporated at the end of the drying process into dried fiber. The pMDI resin is applied to a blow line with wet fiber, and resinated fiber is dried at flash tube dryer. The dried resinated fiber is then collected, and then the mat of resinated fiber is formed, and then pressed into a board with the press under elevated temperature. It is also encompassed to apply pMDI resin to the dried fiber. The mat of resinated fiber is then formed, and then pressed into fiberboard to target density with the press under elevated temperature. For OSB manufacture, strips or flakes of around 1.5-2.5 cm by 10-15 cm are prepared from debarked wood logs and dried to required moisture content. The lignin (either in suspension or powder form) is incorporated with wood strips or flakes in the rotational blender at room temperature, other additives and pMDI are then introduced into the blender via spinning disk with required amount. The mat of resinated strips are then formed, and the mat is pressed to OSB board to target density under elevated temperature.

Particleboard process is similar as a OSB process. The raw materials are wood particles, not strips. Usually fine particles are used in the face layer and coarse particles are used in the core layer. The lignin will be incorporated into wood particles in the blender similar as in a OSB process. The pMDI is blended into wood particle in a blender via an air-pressurized nozzle. The mat of resinated wood particles are then formed in three layer sandwich structure at certain weight ratio of face layer to core layer to face layer , and the mat is pressed into the board to target density under elevated temperature. A uniform particleboard can be made by using wood particles.

In these cases, there is no oligomer or prepolymer of lignin and pMDI being formed when lignin and pMDI are separately introduced into the manufacturing process. The wood could be in different forms such as wood fiber, wood particles, wood flakes, etc. depending on the manufacturing process and product (e.g. fibreboard, particleboard, OSB, etc.) in the resinated fibers or flakes or particles. There might be small portion of lignin and pMDI which have direct contact, and they might have or might not have a reaction between lignin and pMDI because lignin needs to compete with water to react with pMDI. In case the weight ratio of lignin, pMDI and moisture is 3% wt: 3% wt: 8%wt, the ratio of -OH group in lignin: the NCO group in pMDI: OH group in moisture would be 1.0-1.5:2.0:83. If only a small portion of lignin is in contact with pMDI, the chance of reaction between lignin and pMDI would be even lower. Without a catalyst, the reaction of NCO group in pMDI with OH group in lignin and moisture would be low at room temperature. This suggests that the chance of formation of oligomer or prepolymer of lignin and pMDI would be quite low in resinated materials before the pressing. At elevated temperature, all reactions speed up.

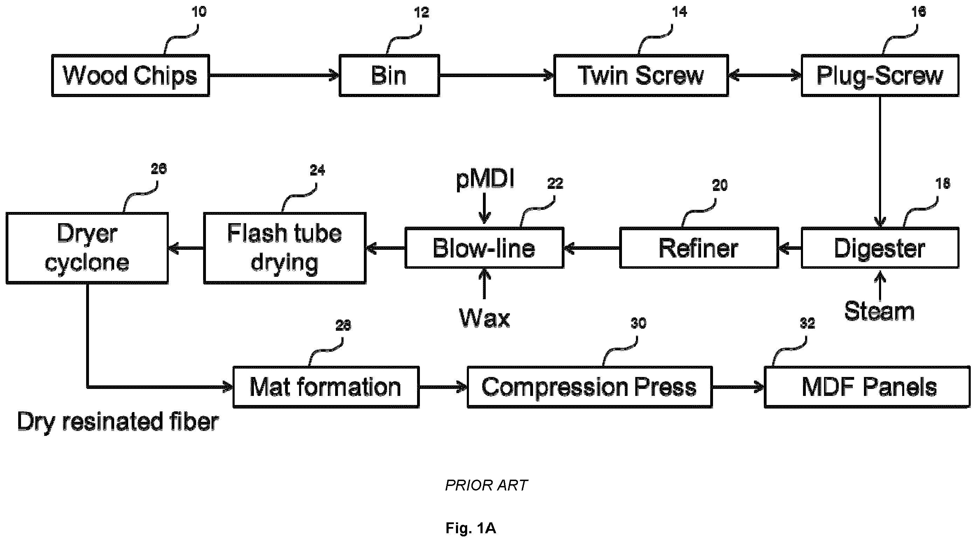

More particularly, as depicted in Fig. 1A, in order to produce fiber boards for example, wood chips 10, are deposited in a bin 12, wherein twin screws 14, and/or plug-screws 16, which compress the wood chips, are used to control the flow rate of flowing wood chips from the bin 12, to a digester 18. Steam addition in the digester 18, allows stable conditioning of the wood chips to be processed. The processed wood chips are then discharged into the refiner 20, for refining, producing refined fibers. The refined fibers are then directed via a blow-line 22, dried in flash tube dryer 24 and a dryer 26, to produce dry resinated fibers. As known in the art, pMDI and wax are normally directly added to the blow-line 22, and then mats are formed 28, from the dry resinated fibers and compressed 30, to produce panels 32, such as MDF panels.

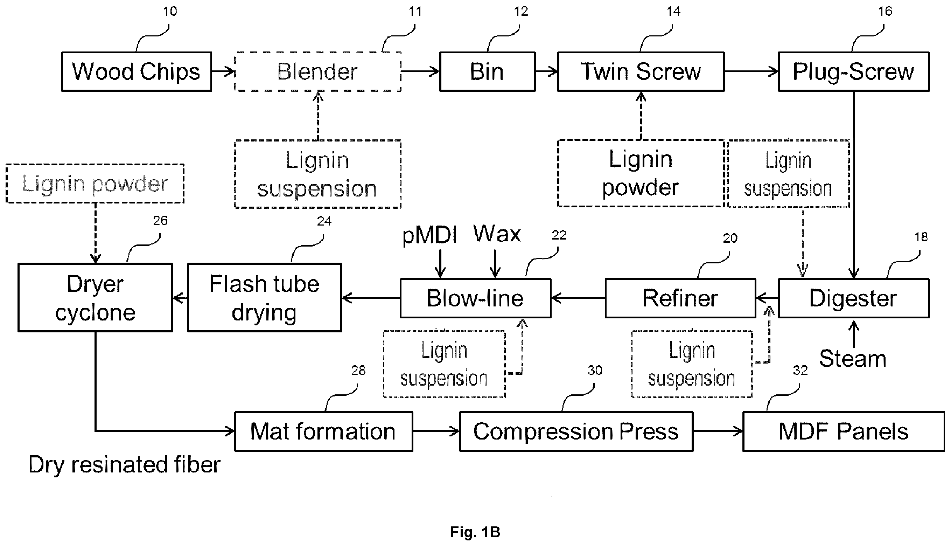

In accordance to one embodiment, to avoid the premixing and the prepolymerization/reaction of lignin with isocyanates, as seen in Fig. 1B, the lignin is added to the wood chips 10 (for MDF), the wood strands (for OSB), the wood particles (for particleboard), or to wood fibers for wood fiber-based insulation boards directly in blender 11. Both wet and dry lignins can be used since the lignin is added to the wood chips, wood strands, wood particles or wood fibers (the latter case is for insulation boards) in the slurry form. Alternatively, the lignin can also be fed at a location between the bin 12 and plug-screw 16 or twin screws such that it is fed with wood chips to the digester 18, or before the refiner 20. In accordance to another embodiment, which mostly applies to MDF, the lignin is added after the refining and drying processes and more specifically in the cyclone dryer 26. This approach prevents the plugging problem due to the high viscosity of the lignin-isocyanate mixture and the pre-reaction of pMDI with lignin when the two are added co-currently into the blow line.

Thus, in the case of MDF, the lignin can be added, for example, to the wood chips 10, while the isocyanate (pMDI) is added, as usual - in the blow line 22 (after refining) - to the wood fibers containing lignin. This approach not only allows the replacement of a significant portion of the isocyanate but, due to the hydrophobic properties of the lignin, it also allows the replacement of significant amounts of paraffin wax which is usually added to the wood fibers to increase their hydrophobicity and, ultimately, improve the reactivity of the pMDI and/or other adhesive formulations.

In accordance to another embodiment, which mostly applies to MDF, the lignin is added after the refining and drying processes and more specifically in the cyclone dryer 26. This approach prevents the plugging problem due to the high viscosity of the lignin-isocyanate mixture and the pre-reaction of pMDI with lignin in the blow line.

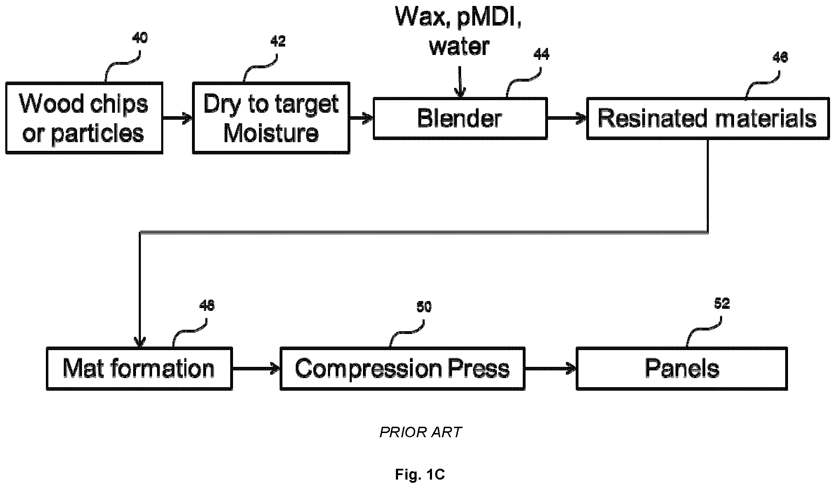

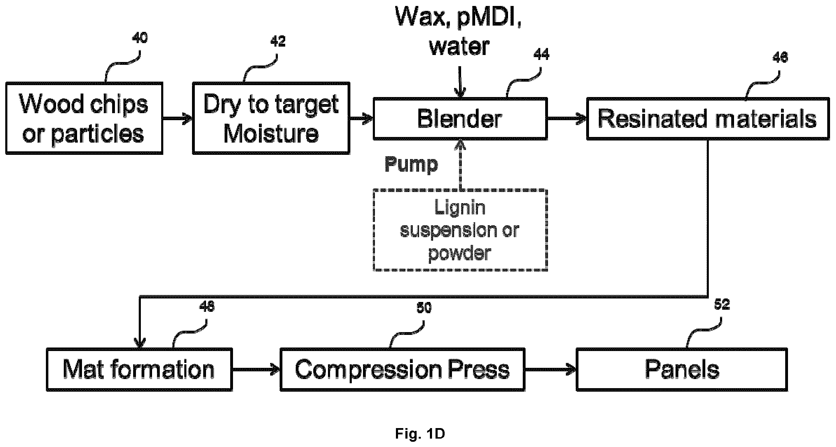

As seen in Fig. 1C, known processes for producing particleboard and OSB normally start by drying the wood chips or particles 40, to the targeted moisture 42. The dried wood chips or particles are then blended 44, with wax, pMDI and water in such a way as to produce resinated materials 46. As described, hereinabove, for the fiber board process, mats are formed 48, from the resinated materials 46, and compressed 52, to produce panels 52 such as OSB or particleboard panels. As encompassed herein, lignin suspension or powder can also be incorporated into the blender 44 (see Fig. 1D), separately and not as a premixed pMDI-lignin mixture. Using this approach, a decrease in the quantity of wax and pMDI used without negatively affecting the properties of the final boards/panels 52, can be achieved.

Accordingly, it is disclosed herein a novel approach of mixing lignin with wood and/or other lignocellulosic materials through mechanical refining at elevated temperature and steam pressure, which can effectively soften the lignin (by reaching or exceeding its glass transition temperature) thereby allowing the lignin to adhere to wood fiber and/or wood particles successfully and uniformly. As a result of this approach, it is demonstrated that washed kraft lignin (otherwise referred to as low residual content (LRC lignin)) can be used to completely or partially replace wax in MDF production, along with the potential of partial substitution of pMDI adhesive resin. This approach of lignin modification of wood fiber properties by the use of mechanical refining is hereby disclosed.

Accordingly, it is described a process of producing fiber products or wood products which results in a decrease in the amount of wax and/or isocyanate needed.

It is thus provided a novel approach for the modification of lignocellulosic materials by lignin through mechanical refining at elevated temperature and pressure, thus imparting improved properties to lignocellulosic fiber materials that are suitable for the manufacture of new or improved fiber products such as medium density fiberboard, insulation board, molded fiber articles, new grades of paper and packaging products, etc. Specifically, it is provided a novel approach for the incorporation of washed kraft lignin (LRC lignin) in the production of MDF to replace wax for dimensional stability of the panel products, and/or partial substitution of adhesive resin for cost savings. Also encompassed is the expansion of these applications to unwashed kraft lignin (otherwise known as high residual content (HRC lignin) or partially washed kraft lignin (otherwise known as medium residual content (MRC lignin) in areas that are not sensitive to high residual organics and/or inorganics contents, e.g. moldings of mixtures of wood fiber and polyester fiber for automobile applications and the like.

The present disclosure will be more readily understood by referring to the following examples.

### EXAMPLE I

### Particleboard Manufacture

Rubinate^{®} 1840 was obtained from Huntsman. This is a polymeric diphenylmethane diisocyanate (pMDI) in the form of a dark brown liquid with a slight aromatic odor. The NCO content was about 30%.

Softwood kraft lignin (hereby referred to as KL) was obtained from the FPlnnovations lignin demonstration plant in Thunder Bay, Ontario, Canada. The lignin used in this work was prepared from black liquor from a Western Canadian mill using the LignoForce^{™} process. As part of the LignoForce process, this lignin was well washed with sulphuric acid and water to produce a lignin of a low residual organic and inorganic content hereby referred to as low residual content (LRC) lignin. An aqueous suspension of this lignin at 15% solids had a pH of about 2.5-3.0. To adjust the pH of this lignin to a higher level, this lignin was treated as follows: a) the lignin was dispersed in water to prepare a 20wt% lignin suspension; b) the pH was adjusted to 6-6.5 using 50% sodium hydroxide solution; c) the lignin suspension was filtered to remove the excess water and alkali; d) the lignin cake was dried until the moisture content was about 5wt%; e) the lignin was ground using a Wiley mill and passed through a 100-mesh sieve (149 micron).

Oxypropylated softwood kraft lignin (hereby referred to as OL) was obtained from an industrial partner. This lignin was ground using a Wiley mill, passed through a 100-mesh sieve (149 micron), dried until the moisture content was ≤ 0.5%, cooled and kept in a well-sealed container for further use. The chemical composition and other features of the oxypropylated lignin are listed in Table 1.

**Table 1**

| Chemical composition and features of oxypropylated lignin | | |
|---|---|---|
| **Items** | **Unit** | **Typical value** |
| Total solids | % | 97.9 |
| Ash at 575°C | % | 1.57 |
| Organics | % | 98.43 |
| Na | % | 0.482 |
| Total S | % | 1.34 |
| Lignin (Klason + UV from sugars analysis) | % | 95.42 |
| Total sugars | sum % | 0.75 |
| Soaps | % | 0.50 |
| HHV | Btu/lb | 12187 |
| C | % | 64.45 |
| H | % | 6.511 |
| N | % | 0.05 |
| O | % | 23.73 |
| Total COOH | mmol/g | 0.19 |
| Total phenolic OH | mmol/g | 0.14 |
| Aliphatic OH (sum) | mmol/g | 2.57 |
| MWD (Mw), using MALLS detector | Da | 17930 |
| Polydispersity (Mw/Mn ratio) MALLS | - | 1.33 |

STEPANPOL PS-2352 (from Stepan Company) is an aromatic polyester polyol of exceptional purity and low viscosity. Polyester polyol content is in the range of 60-85%, and diethylene glycol content is 10-20%. The hydroxyl Number is 230-250mg KOH/g. Specific Gravity at 77 °F (25 °C) is 1.19.

Polyethylene glycol 400 (hereafter referred to as PEG 400) is polyethylene glycol with molecular weight of 400.

Polyethylene glycol 200 (hereafter referred to as PEG 200) is polyethylene glycol with molecular weight of 200.

### Experiment 1. Addition of kraft lignin by dissolving in polyol or tumbling in with wood particles in particleboard preparation

Particleboard panels were manufactured based on the processes indicated in Figs. 1C and 1D. The particleboard panel manufacturing conditions are presented in Table 2 below:

**Table 2**

| Conditions for particleboard manufacture | | |
|---|---|---|
| **Items** | **Unit** | **Remarks** |
| Board dimensions | mm | 610 x 610 x 12.7 |
| Board construction | | one layer homogenous |
| Wood species | | Mainly SPF mixture (spruce, pine and Douglas fir) |
| Support | | Caul plates or control by software (depends on the press used) |
| Emulsion wax | % | 0.5 (solids on a dry wood basis) |
| Target mat MC | % | 6~8 |
| Board target density | kg/m³ | 690 |
| Press temperature | °C | 200 (surface of platen) |
| Total press time | Sec | 180 (daylight to daylight) |
| Press closing time | Sec | 20 |
| Degas time | Sec | 30 |
| Replicates | | 3 |

The formulations used are listed in Table 3.

**Table 3**

| Wood adhesive formulations for Samples I-1 to I-9 | | | | | |
|---|---|---|---|---|---|
| Sample No. | Formulations | | | Moisture content of wood after mixing (%) | Method of lignin addition |
| | pMDI (%) | Polyol name & dosage (%) | Lignin (%) | | |
| I-1 | 3.0 | - | - | 8 | Control |
| I-2 | 1.20 | 1.80 (PS 2352) | - | ≤ 6 | |
| I-3 | 1.84 | 1.16 (PEG 200) | - | ≤ 6 | |
| I-4 | 1.20 | 1.62 (PS 2352) | 0.18 | ≤ 6 | Lignin in polyol |
| I-5 | 1.2 | 1.62 (PS 2352) | 0.18 | ≤ 6 | 1) Polyol, 2) Lignin separately blended in |
| I-6 | 1.77 | 1.03 (PEG 200) | 0.20 | ≤ 6 | Lignin in PEG 200 |
| I-7 | 1.3 | 1.50 (PEG 400) | 0.20 | ≤ 6 | Lignin in PEG 400 |
| I-8 | 2.6 | - | 0.40 | 7.0 | Tumbling lignin in with wood particles |
| I-9 | 2.8 | - | 0.20 | 7.5 | Tumbling lignin in with wood particles |

For all panel making, the sequence of incorporating additives was as follows: 1) loading of emulsion wax, 2) loading of polyol or polyol with lignin, 3) loading of lignin if needed, and 4) loading of pMDI.

The flexural properties, internal bonding, 24-h thickness swelling & water absorption properties of particleboard are presented in Table 4 below:

**Table 4**

| Evaluation of particleboard (Samples I-1 to I-9) | | | | | | |
|---|---|---|---|---|---|---|
| **Sample No.** | **Density (kg/m3)** | **MOR (MPa)** | **MOE (MPa)** | **TS (%)** | **WA (%wt)** | **IB (MPa)** |
| I-1 | 674±28 | 15.03±0.84 | 2782±210 | 11.6±0.5 | 18.1±1.4 | 0.79±0.09 |
| I-2 | 653±24 | 10.23±1.02 | 2090±191 | 47.0±5.1 | 90.6±2.1 | 0.35±0.03 |
| I-3 | 677±18 | 18.88±2.32 | 3047±255 | 9.4±0.2 | 15.6±0.9 | 0.99±0.05 |
| I-4 | 667±24 | 11.46±0.34 | 2269±96 | 35.9±1.9 | 66.4±3.4 | 0.53±0.07 |
| I-5 | 659±24 | 11.06±0.75 | 2176±122 | 40.0±3.5 | 78.2±3.1 | 0.46±0.04 |
| I-6 | 664±23 | 12.14±1.28 | 2292±137 | 17.8±1.3 | 27.0±1.4 | 0.43±0.12 |
| I-7 | 669±19 | 11.30±1.23 | 2362±239 | 24.6±0.7 | 36.8±1.1 | 0.42±0.04 |
| I-8 | 677±22 | 14.04±1.29 | 2585±240 | 12.1±0.8 | 18.1±1.4 | 0.68±0.08 |
| I-9 | 687±21 | 14.74±2.17 | 2666±242 | 12.1±0.9 | 17.4±1.4 | 0.72±0.07 |

The distribution of wood adhesives in wood particles has a significantly impact on the panel performance. Usually, the viscosity of the wood adhesive for particleboard is less than 1000cps at 25°C. If the viscosity of the adhesive is high, one can increase the temperature of the wood adhesive to 30°C or 40°C to reduce it to reasonable levels. Polyester polyol PS 2352 has a high viscosity (2000-4500cps at 25°C). The viscosity of PEG 400 is 120 cps at 20°C. The viscosity of PEG 200 is 60 cps at 20°C. The viscosity of the mixture dramatically increases when lignin is added to polyol (e.g. PEG 200, PEG 400 or PS 2352). High mixture viscosity (e.g. sample Nos. I-2, I-4, I-5, I-6, I-7) usually result in the uneven distribution of polyol on wood the surface, and the polyol has thus less chance to meet with and react with pMDI. Tumbling in lignin in the powder form can avoid having a high viscosity mixture of lignin in polyol and/or lignin in isocyanates, and lignin could thus be well distributed on the wood surface. As seen in Table 4, samples No. I-8 and I-9, for which, lignin was tumbled in with the wood particles, show comparable performance to the control sample No. I-1 with respect to most properties including: MOR, MOE, TS, WA and IB.

### Experiment 2. Addition of kraft lignin (KL) or oxypropylated kraft lignin (OL) by tumbling in with the wood particles in particleboard preparation

More particleboards were made under the same conditions as Samples I-1 to I-9, but in none of the cases studied the lignin was pre-mixed with polyol. Lignin was directly added into a blender in the powder form and tumbled in with the wood particles. Two lignins were used: 1) KL and 2) OL. The adhesive dosage information and moisture of wood after mixing are listed in Table 5.

**Table 5**

| Formulations for particleboard manufacture | | | | |
|---|---|---|---|---|
| **Sample No.** | **Formulations*** | | **Moisture content**** | **Method of lignin addition** |
| | **pMDI (%)** | **Lignin (%)** | **%** | |
| I-1 | 3.0 | - | 8 | Control |
| I-10 | 2.55 | 0.45 (KL) | 7.6 | Tumbling lignin in with wood particles |
| I-11 | 2.25 | 0.75 (KL) | 7.2 | Tumbling lignin in with wood particles |
| I-12 | 2.00 | 1.00 (KL) | 7.0 | Tumbling lignin in with wood particles |
| I-13 | 2.55 | 0.45 (OL) | 7.6 | Tumbling lignin in with wood particles |
| I-14 | 2.25 | 0.75 (OL) | 7.2 | Tumbling lignin in with wood particles |
| I-15 | 2.00 | 1.00 (OL) | 7.0 | Tumbling lignin in with wood particles |

| | | | | |
|---|---|---|---|---|
| *based on oven dry wood mass, ** mixture of wood with adhesives | | | | |

For all panel making, the sequence of incorporating additives was as follows: 1) loading emulsion wax, 2) tumbling in the lignin, and 3) adding the pMDI. The properties of the particleboard panels made are listed in Table 6.

**Table 6**

| Evaluation of particleboard panels (Samples I-10 to I-15) | | | | | | |
|---|---|---|---|---|---|---|
| **Example** | **Density (kg/m³)** | **MOR (MPa)** | **MOE (MPa)** | **TS (%)** | **WA (%wt)** | **IB (MPa)** |
| I-1 | 713±11 | 14.9±1.9 | 2642±279 | 9.92±0.78 | 13.42±1.05 | 0.75±0.06 |
| I-10 | 706±13 | 15.4±3.8 | 2715±506 | 10.47±0.97 | 14.54±1.31 | 0.60±0.11 |
| I-11 | 708± 7 | 16.3±2.2 | 2929±303 | 12.88±1.05 | 17.91±1.20 | 0.61±0.07 |
| I-12 | 709± 7 | 16.1±3.0 | 2870±486 | 13.52±1.25 | 18.18±2.38 | 0.55±0.09 |
| I-13 | 718± 6 | 16.1±3.8 | 2839±462 | 10.59±0.91 | 15.29±0.58 | 0.68±0.12 |
| I-14 | 713±22 | 16.4±2.5 | 2962±308 | 11.81±0.61 | 16.61±1.12 | 0.66±0.08 |
| I-15 | 694±12 | 12.4±2.3 | 2398±296 | 11.61±0.36 | 14.43±1.09 | 0.52±0.09 |

As seen in Table 6, samples No. I-10 to I-14, for which, lignin was tumbled in with the wood particles and the lignin portion in the adhesive did not exceed 25wt% of the total adhesive used, show comparable performance to the control sample No. I-1 with respect to most properties including: MOR, MOE, TS, WA and IB.

### Experiment 3. Addition of kraft lignin to wood particles in the form of an aqueous dispersion

Additional particleboard panels were made as Samples I-1 to I-9 but the lignin was first dispersed in water to have a 15-20% aqueous dispersion and then mixed with the wood particles using a blender as indicated in Fig. 1D. The lignin used was unwashed hydrolysis lignin (H-lignin) from the TMP-Bio process. The adhesive dosage information and moisture of wood after mixing are listed in Table 7.

**Table 7**

| Formulations for particleboard manufacture | | | |
|---|---|---|---|
| **Sample No.** | **Formulations*** | | **Method of lignin addition** |
| | **pMDI (%)** | **Lignin (%)** | |
| I-16 | 3.0 | - | |
| I-17 | 2.7 | 0.3 | 15-20% aqueous suspension of lignin was prepared and applied |
| I-18 | 2.4 | 0.6 | 15-20% aqueous suspension of lignin was prepared and applied |
| I-19 | 2.1 | 0.9 | 15-20% aqueous suspension of lignin was prepared and applied |

| | | | |
|---|---|---|---|
| *based on oven dry wood mass | | | |

For panel making, the sequence of incorporating additives was: 1) loading of emulsion wax, 2) addition of lignin suspension and 3) addition of pMDI. The properties of the particleboard panels made are listed in Table 8.

**Table 8**

| Evaluation of particleboard (Samples I-16 to I-19) | | | | | | |
|---|---|---|---|---|---|---|
| **Example** | **Density (kg/m³)** | **MOR (MPa)** | **MOE (MPa)** | **TS (%)** | **WA (%wt)** | **IB (MPa)** |
| I-16 | 710±44 | 14.35±2.66 | 2631±401 | 9.89±0.94 | 24.46±1.89 | 0.46±0.11 |
| I-17 | 722±45 | 14.34±0.90 | 2578±183 | 10.47±0.73 | 26.26±2.91 | 0.60±0.12 |
| I-18 | 712±45 | 15.47±2.13 | 2833±249 | 10.16±0.67 | 26.20±1.42 | 0.42±0.09 |
| I-19 | 691±43 | 12.58±2.39 | 2380±400 | 12.85±2.31 | 31.64±7.19 | 0.32±0.08 |

As seen in Table 8, samples No. I-17 and I-18, for which, lignin was added as a 15-20wt% suspension and the lignin portion in the adhesive did not exceed 20wt% of the total adhesive used, show comparable performance to the control sample No. I-16 with respect to most properties including: MOR, MOE, TS, WA and IB.

### EXAMPLE II

### Medium Density Fiberboard (MDF) Manufacture

Rubinate^{®} 1840 was obtained from Huntsman. This is a polymeric diphenylmethane diisocyanate (pMDI) in the form of a dark brown liquid with a slight aromatic odor. The NCO content was about 30wt%.

Softwood kraft lignin (hereby referred to as KL) was obtained from the FPlnnovations lignin demonstration plant in Thunder Bay, Ontario, Canada. The lignin used in this work was prepared from black liquor from a Western Canadian mill using the LignoForce^{™} process. As part of the LignoForce process, this lignin was well washed with sulphuric acid and water to produce a lignin of a low residual organic and inorganic content hereby referred to as low residual content (LRC) lignin. An aqueous suspension of this lignin at 15% solids had a pH of about 4.0-5.5.

### Experiment 4. Addition of kraft lignin to pMDI prior to injection into the blowline

In this experiment, KL was used to replace 10wt% and 15wt% of pMDI, and lignin was mixed with pMDI prior to injection into the blowline (as illustrated in Fig. 1A). The resin dosage and adhesive addition rate are shown in Table 13. The moisture content of lignin was about 5wt%.

**Table 9**

| Resin dosage for MDF manufacture (Samples II-1 and II-2) | | | | |
|---|---|---|---|---|
| **Sample No.** | **Resin dosage (%)** | **Ratio of lignin to pMDI** | **Adhesive addition rate (g/h)** | **Method of adhesive addition** |
| II-1 | 3 | 10:90 | 1200 | Via blow-line injection |
| II-2 | 3 | 15:85 | 1200 | via blow-line injection |

The conditions used for MDF panel manufacture are shown in Table 10.

**Table 10**

| MDF panel manufacturing conditions | | |
|---|---|---|
| **Items** | **Unit** | **parameters** |
| Panel size | mm | 660 x 660 x 9.5 |
| Target panel density | kg/m³ | 780 |
| Hot press temperature | °C | 190 |
| Total press time | Sec | 165 |
| No. of panels per fibre type | | 2 |

However, in this trial, the injection port of the blowline was plugged after a few minutes of injection of the lignin-pMDI mixture. This indicated that the lignin might have reacted with pMDI and gelled at 70-80°C in a short period of time. This might also have been due to the moisture in the lignin and/or the high viscosity of the lignin-pMDI mixture. This experiment demonstrated very clearly that mixing lignin directly with pMDI prior to injection into the MDF manufacturing process will not lead to a technically and commercially viable process for the introduction of lignin into such processes.

### EXAMPLE III

### Partial replacement of wax and pMDI adhesive resin with Kraft lignin in MDF production

Rubinate^{®} 1840 was obtained from Huntsman. This is a polymeric diphenylmethane diisocyanate (pMDI) in the form of a dark brown liquid with a slight aromatic odor. The NCO content was about 30wt%.

Wood raw material was SPF wood chips sourced in Quebec, Canada. The consistency of the wood chips was about 50%. About 250 kg of wood was obtained and used (on a dry-weight basis).

Lignin was LignoForce^{™} softwood LRC kraft lignin in the form of a fine powder. The moisture content of this lignin was determined for the purpose of substitution of pMDI resin solids content.

Hydrolysis lignin (hereafter referred to as H-lignin) was obtained from FPlnnovations, Pointe-Claire, Quebec. This lignin was produced using the TMP-Bio process described in U.S. Patent No. 9,580,454. The H-lignins received, were unwashed H-lignin, and washed H-lignin, in the powder form passing 60 sieve screen. These were dispersed in water to prepare a 15-20wt% aqueous dispersion prior to mixing with the wood chips.

Emulsion wax was used. The pH of the emulsion wax was 8.25-9.25. The solids content was ~58%. The specific gravity was ~1.0.

### Experiment 5. Addition of kraft lignin to the wood chips before the refiner of the MDF manufacturing process

Each batch of wood chips was premixed with a calculated amount of water, E-wax and LignoForce^{™} softwood LRC kraft lignin from the industrial suppliers. The resulting wood/lignin/wax mixtures were measured for their moisture contents. The moisture content of the ground lignin was of 28.7%. The consistency of the wood chips was ~ 50%. Emulsion wax was sprayed with a spin disk. The lignin slurry was poured into the wood chips inside an OSB blender and mixed for a few minutes. The formulations are listed in Table 11.

**Table 11**

| Chemical formulations | | | | |
|---|---|---|---|---|
| **Sample** | **Lignin A (%)** | **pMDI (%)** | **Wax (%)** | **Comments** |
| III-1 | 0 | 3.00 | 0.5 | Added same amount of water to E-wax as III-2 for premixing with wood chips |
| III-2 | 0.75 | 3.00 | 0 | Lignin slurry (water: lignin = 4:1) |
| III-3 | 0.45 | 2.55 | 0.5 | Same amount of water to E-wax as III-2 |
| III-4 | 0.60 | 2.40 | 0.5 | Same amount of water to E-wax as III-2 |
| III-5 | 0.75 | 2.25 | 0.5 | Same amount of water to E-wax as III-2 |

For fiber refining, the raw material was loaded and conditioned under steam pressure to reach the target temperature. The refining conditions are listed in Table 12. The target dry wood fiber flow was 25 kg/hr.

**Table 12**

| Refining Process Conditions | |
|---|---|
| **Process parameter** | **Set Point** |
| Pre-steam temperature | 50°C |
| Preheater temperature | 165°C |
| Retention time of preheating | 2.5 minutes |
| Typical specific refining energy | 230-270 KWH/ODT |
| Refiner disc speed | 3000 rpm |
| Resin type | pMDI or pMDI + LignoForce LRC lignin |
| Overall adhesive solids addition rate | 3.0% |
| Target moisture content of the fiber after drying | 8% |

pMDI resin was injected through the blowline once the refining process was stabilized (resin blending). The batch size of each blend was about 50 kg (OD basis).

The refined and resinated fiber was dried by a flash tube dryer to the target moisture content of about 8%. The target moisture content of the fiber was achieved by adjusting the inlet temperature of the dryer.

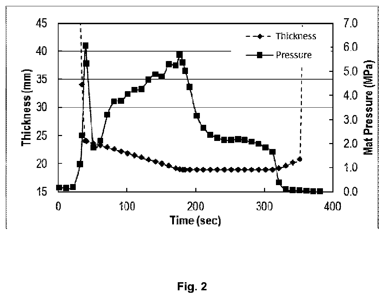

Fiber mats were prepared in the pilot plant, manually. The mats were hot-pressed into ¾" thick MDF panels. The size of the panels was 24" x 24" x 3/4" (i.e. 610 mm x 610 mm x 19 mm). The press operating conditions are shown in Table 13. Wax paper was used as a release method for the board pressing. A total of 15 panels were made (3 panels x 5 process conditions). Hot IB tests were performed to ensure adequate curing of the resin system and adequate board strength for further testing. The final press cycle (as illustrates as an example in Fig. 2) time was determined based on the hot IB test results.

**Table 13**

| Panel-Making Process Conditions | | |
|---|---|---|
| **Process parameter** | **Unit** | **Set Point** |
| Panel dimension | mm | 610 x 610 x 19 |
| Release sheets | | Wax paper |
| Support | | Control by software |
| Target density | kg/m³ | 771 |
| Press temperature | °C | 185 |
| Press stand-off | | Fast close to 128% of target final thickness (about 40-45 seconds) |
| Duration of slow closing to target thickness after stand-off | seconds | 145 |
| Cook time at target thickness | seconds | 130 |
| Degas time | seconds | 45 |
| Total press time | seconds | 356 |
| Replicate | | 3 panels |

All panels were conditioned in a conditioning room at 65% relative humidity at 20°C for at least three weeks for the panels to reach the equilibrium moisture content (Table 14).

Three panels were produced for each manufacturing condition and tested for their mechanical and physical properties in accordance with ASTM D 1037 and ANSI A 208.2. The tests conducted on the panels included: average density, internal bond strength (IB), thickness swelling (TS) and water absorption (WA) after 24-hour water soaking, MOE/MOR and vertical density profile (Tables 15-17).

**Table 14**

| MDF Panel Density | | | | | |
|---|---|---|---|---|---|
| **Sample** | **Lignin A (%)** | **pMDI (%)** | **Wax (%)** | **Furnish Moisture Content (%)** | **After Conditioning Panel Density (kg/m³)** |
| III-1 | 0 | 3.00 | 0.5 | 7.3 | 785±4 |
| III-2 | 0.75 | 3.00 | 0 | 5.8 | 775±11 |
| III-3 | 0.45 | 2.55 | 0.5 | N/A | 768±6 |
| III-4 | 0.60 | 2.40 | 0.5 | 6.7 | 765±13 |
| III-5 | 0.75 | 2.25 | 0.5 | 5.3 | 751±3 |

**Table 15**

| Water Resistance | | | | | |
|---|---|---|---|---|---|
| **Sample** | **Lignin ² (%)** | **pMDI** ² **(%)** | **Wax ² (%)** | **Average Thickness Swelling (%) ¹** | **Average Water Absorption (%) ¹** |
| III-1 | 0 | 3.00 | 0.5 | 8.9(0.9) | 18.9(1.7) |
| III-2 | 0.75 | 3.00 | 0 | 9.1 (0.3) | 19.7(1.5 |
| III-3 | 0.45 | 2.55 | 0.5 | 10.1(2.9) | 20.7(5.5) |
| III-4 | 0.60 | 2.40 | 0.5 | 9.1 (0.5) | 17.8(1.5) |
| III-5 | 0.75 | 2.25 | 0.5 | 9.8(0.8) | 20.1(2.1) |

| | | | | | |
|---|---|---|---|---|---|
| ¹ Average of nine (9) specimens ² Solid basis on dry wood | | | | | |

**Table 16**

| Bending Strength | | | | | | |
|---|---|---|---|---|---|---|
| **Sample** | **Lignin ² (%)** | **pMDI ² (%)** | **Wax ² (%)** | **Average Specimen density (kg/m³) ¹** | **Average MOR (MPa) ¹** | **Average MOE (MPa) ¹** |
| III-1 | 0 | 3.00 | 0.5 | 778±37 | 32.6± 4.2 | 4295± 365 |
| III-2 | 0.75 | 3.00 | 0 | 765± 53 | 30.4± 5.4 | 3974± 482 |
| III-3 | 0.45 | 2.55 | 0.5 | 763± 47 | 28.2± 3.9 | 3823± 340 |
| III-4 | 0.60 | 2.40 | 0.5 | 755± 30 | 28.4± 3.4 | 3930± 309 |
| III-5 | 0.75 | 2.25 | 0.5 | 749 ± 30 | 26.9± 1.7 | 3654± 201 |

| | | | | | | |
|---|---|---|---|---|---|---|
| ¹ Average of three (9) specimens ² Solid basis on dry wood | | | | | | |

**Table 17**

| Internal Bond Strength | | | | | | |
|---|---|---|---|---|---|---|
| **Sample** | **Lignin ² (%)** | **pMDI ² (%)** | **Wax ² (%)** | **Average density (kg/m³) ¹** | **Average Internal bond strength (MPa) ¹** | **Core Failure Ratio (%)** |
| III-1 | 0 | 3.00 | 0.5 | 795±20 | 0.60± 0.23 | 100 |
| III-2 | 0.75 | 3.00 | 0 | 778±37 | 0.70± 0.17 | 100 |
| III-3 | 0.45 | 2.55 | 0.5 | 776±29 | 0.67± 0.13 | 100 |
| III-4 | 0.60 | 2.40 | 0.5 | 767±29 | 0.59± 0.10 | 100 |
| III-5 | 0.75 | 2.25 | 0.5 | 760±25 | 0.57± 0.12 | 100 |

| | | | | | | |
|---|---|---|---|---|---|---|
| ¹ Average of eight (24) specimens ² Solid basis on dry wood | | | | | | |

As seen in Tables 15-17, samples No. III-3 and III-5, for which, kraft lignin was added to the wood chips prior to the refiner of the MDF process, and the lignin portion in the adhesive did not exceed 25wt% of the total adhesive used, show comparable performance to the control sample No. III-1 with respect to most properties including: TS, WA, MOR, MOE, and IB.

Furthermore, as seen in Tables 15-17, sample No. III-2, for which, kraft lignin was added to the wood chips prior to the refiner of the MDF process as a 100% replacement of wax, shows comparable performance to the control sample No. III-1 with respect to most properties including: TS, WA, MOR, MOE, and IB.

### Experiment 6. Addition of hydrolysis lignin to the wood chips before the refiner of the MDF manufacturing process

Each batch of SPF wood chips was premixed with a calculated amount of slurry of H-lignin and/or emulsion wax through an OSB rotary blender without the use of the spinning disc. The ratio of dry H-lignin/water in the slurry was approximately 1:4. The resulting wood/lignin/wax mixtures were measured for their moisture content. The consistency of the mixtures were around 50%. The formulations prepared are described in Table 18.

**Table 18**

| Chemical formulations | | | | | |
|---|---|---|---|---|---|
| **Sample #** | **H-Lignin type** | **Lignin (%)** | **pMDI (%)** | **Wax (%)** | **Comments** |
| III-6 | - | 0 | 3.00 | 0.5 | Added same amount of water to E-wax as in III-13 for premixing with wood chips |
| III-7 | - | 0 | 2.25 | 0.5 | Added same amount of water to E-wax as in III-13 for premixing with wood chips |
| III-8 | Washed | 1.25 | 3.00 | 0 | Lignin slurry (water: lignin = 4:1) |
| III-9 | Washed | 0.75 | 2.55 | 0.5 | Added same amount of water to E-wax as III-13 |
| III-10 | Washed | 1.26 | 2.25 | 0.5 | Added same amount of water to E-wax as III-13 |
| III-11 | Unwashed | 2.14 | 3.00 | 0 | Lignin slurry (water: lignin = 4:1) |
| III-12 | Unwashed | 1.29 | 2.55 | 0.5 | Added same amount of water to E-wax as III-13 |
| III-13 | Unwashed | 2.14 | 2.25 | 0.5 | Lignin slurry (water: lignin = 4:1) |
| III-14 | unwashed | 0.45 | 2.55 | 0.5 | For comparison with III-12 |

The process used is shown in Fig. 1B, in which lignin was incorporated using the blender. The refining conditions are listed in Table 19. The target dry wood fiber flow was 40 kg/hr. pMDI was injected via the blowline at the dosage listed in Table 18. The refined and resinated fiber was dried by a flash tube dryer to the target moisture content of about 8%. The target moisture content of the fiber was achieved by adjusting the inlet temperature of the dryer.

**Table 19**

| Refining process conditions | |
|---|---|
| **Items** | **Set points** |
| Plug-screw speed | 12 RPM |
| Feed bin speed | 0.8 RPM |
| Digester steam pressure | 8 bar |
| Refiner plate gap | 0.1 mm |
| Retention time | 2.5 min |
| Refiner speed | 2000RPM |
| pMDI loading | See table above for different formulations |
| Dryer temperature | 110 °C |
| Dry fiber flow rate | Target 40 kg/m3 |
| Target moisture of the dried fiber | 8% |

Fiber mats were prepared in the pilot plant, manually. The mats were hot-pressed into ¾" thick MDF panels. The size of the panels was 24" x 24" x 3/4" (i.e. 610 mm x 610 mm x 19 mm). The press operating conditions are shown in Table 20. The panel density was about 700 kg/m³.

**Table 20**

| Parameters of MDF panel manufacture | |
|---|---|
| **Process parameter** | **Set Point** |
| Panel dimension | 610 mm x 610 mm x 19 mm |
| Method of sheet release | Wax paper or Teflon sheets |
| Support | Caul plates at the bottom and on the top |
| Press temperature | 185°C |
| Press stand-off | Fast close to 128% of target final thickness (about 40-45 seconds) |
| Duration of slow closing to target thickness after stand-off | 145 seconds |
| Cook time at target thickness | 130 seconds |
| Degas time | 45 seconds |
| Total press time | Possibly 356 seconds |
| Replicate | 3 panels per condition |

All panels were conditioned in a conditioning room at 65% relative humidity at 20°C for at least three weeks for the panels to reach the equilibrium moisture content.

After conditioning, the MDF panels were tested for their mechanical and physical properties in accordance with ASTM D 1037 and ANSI A 208.2. The tests of the panels included average density, internal bond strength (IB), thickness swell (TS) and water absorption (WA) after 24-hour water soaking, MOE/MOR. All results are listed in Tables 21-23.

**Table 21**

| Internal bond (IB) strength | | | | | | |
|---|---|---|---|---|---|---|
| **No.** | **Lignin type** | **lignin** | **pMDI** | **Wax** | **Density** | **IB** |
| | | **%** | **%** | **%** | **kg/m3** | **MPa** |
| III-6 | - | - | 3 | 0.5 | 700±7 | 0.38±0.14 |
| III-7 | - | - | 2.25 | 0.5 | 717±10 | 0.06±0.05 |
| III-8 | washed | 1.25 | 3 | 0 | 722±10 | 0.31±0.16 |
| III-9 | washed | 0.75 | 2.55 | 0.5 | 718±10 | 0.40±0.18 |
| III-10 | washed | 1.26 | 2.25 | 0.5 | 729±11 | 0.36±0.12 |
| III-11 | unwashed | 2.14 | 3 | 0 | 709±8 | 0.34±0.07 |
| III-12 | unwashed | 1.29 | 2.55 | 0.5 | 707±4 | 0.24±0.15 |
| III-13 | unwashed | 2.14 | 2.25 | 0.5 | 705±6 | 0.05±0.03 |
| III-14 | unwashed | 0.45 | 2.55 | 0.5 | 707±9 | 0.45±0.11 |

**Table 22**

| Thickness swelling and water absorption | | | | | | | |
|---|---|---|---|---|---|---|---|
| **Sample.** | **Lignin type** | **lignin** | **pMDI** | **Wax** | **Density** | **Thickness Swelling** | **Water Absorption** |
| | | **%** | **%** | **%** | **kg/m3** | **%** | **%wt/wt** |
| III-6 | - | - | 3 | 0.5 | 672±12 | 11.1±0.5 | 24.9±1.5 |
| III-7 | - | - | 2.25 | 0.5 | 686±25 | 25.5±4.9 | 50.0±7.5 |
| III-8 | washed | 1.25 | 3 | 0 | 699±13 | 12.6±1.2 | 28.1±2.1 |
| III-9 | washed | 0.75 | 2.55 | 0.5 | 706±13 | 12.6±0.6 | 27.5±1.9 |
| III-10 | washed | 1.26 | 2.25 | 0.5 | 714±14 | 17.0±3.5 | 35.0±5.1 |
| III-11 | unwashed | 2.14 | 3 | 0 | 689±12 | 12.0±0.6 | 27.4±1.1 |
| III-12 | unwashed | 1.29 | 2.55 | 0.5 | 722±33 | 10.2±1.1 | 22.8±2.5 |
| III-13 | unwashed | 2.14 | 2.25 | 0.5 | 723±18 | 16.1±4.1 | 31.2±5.9 |
| III-14 | unwashed | 0.45 | 2.55 | 0.5 | 718±134 | 12.3±0.8 | 24.7±1.7 |

**Table 23**

| Bending properties of MDF panels | | | | | | | |
|---|---|---|---|---|---|---|---|
| **Sample.** | **Lignin type** | **lignin** | **pMDI** | **Wax** | **Density** | **MOR** | **MOE** |
| | | **%** | **%** | **%** | **kg/m3** | **MPa** | **MPa** |
| III-6 | - | - | 3 | 0.5 | 704±46 | 21.9±7.2 | 2228±331 |
| III-7 | - | - | 2.25 | 0.5 | 718±7 | 12.9±1.5 | 2056±66 |
| III-8 | washed | 1.25 | 3 | 0 | 713±16 | 19.1±1.7 | 2336±197 |
| III-9 | washed | 0.75 | 2.55 | 0.5 | 707±18 | 16.8±1.9 | 2177±209 |
| III-10 | washed | 1.26 | 2.25 | 0.5 | 713±24 | 15.6±3.4 | 2131±259 |
| III-11 | unwashed | 2.14 | 3 | 0 | 699±11 | 16.8±1.0 | 2084±117 |
| III-12 | unwashed | 1.29 | 2.55 | 0.5 | 712±29 | 18.4±3.7 | 2285±255 |
| III-13 | unwashed | 2.14 | 2.25 | 0.5 | 702±8 | 13.2±1.8 | 1938±152 |
| III-14 | unwashed | 0.45 | 2.55 | 0.5 | 714±19 | 17.0±1.0 | 2124±98 |

Based on the results appearing in Tables 21-23 the following conclusions can be drawn:
a) Sample No. III-7 for which, the pMDI charge was reduced from 3wt% to 2.25% while maintaining the wax charge at 0.5wt% demonstrated a significant decline in properties such as internal bond strength, TS, WA, MOR and MOE
b) Sample No. III-8 for which washed hydrolysis lignin was added to the wood chips prior to the refiner of the MDF process as a 100% replacement of wax, showed comparable properties to the control with respect to internal bond strength, TS, WA, MOR and MOE.
c) Samples Nos. III-8 to III-10 for which washed hydrolysis lignin was added to the wood chips prior to the refiner of the MDF process, and the pMDI replacement level by lignin did not exceed 25wt% of the total adhesive used in the control experiment (3wt%), show a somewhat inferior but still acceptable performance compared to the control sample No. III-1 with respect to most properties including: TS, WA, MOR, MOE, and IB.
d) Sample No. III-11 for which unwashed hydrolysis lignin was added to the wood chips prior to the refiner of the MDF process as a 100% replacement of wax, showed somewhat lower but still acceptable properties compared to the control with respect to internal bond strength, TS, WA, MOR and MOE.
e) Samples No. III-14 for which unwashed hydrolysis lignin was added to the wood chips prior to the refiner of the MDF process, the MDF replacement level by lignin did not exceed 15wt% of the total adhesive used in the control experiment (3wt%) and the actual lignin addition level was 0.45wt% showed a comparable performance to the control sample No. III-1 with respect to most properties including: TS, WA, MOR, MOE, and IB. This same sample demonstrated a performance that was superior to sample III-12 for which the unwashed lignin charge was 1.29wt% and a significantly superior performance compared to sample III-13 for which the unwashed lignin charge was 2.14%. It appears from these data that using too much unwashed lignin (>1.29wt% on dry wood basis) to replace pMDI leads to inferior results.

### Experiment 7. Repetition of most of Experiment 6 to produce MDF panels at higher density (addition of hydrolysis lignin to the wood chips before the refiner of the MDF manufacturing process)

The sample codes and the formulations used are described in Table 24. All process parameters for this experiment are the same as Example 6 except for the target density of MDF panels which was targeted to be about 770 kg/m³. All results are listed in Table 25, including internal bond strength (IB), thickness swell (TS) and water absorption (WA) after 24-hour water soaking as well as MOE/MOR.

**Table 24**

| Adhesive Formulations | | | | |
|---|---|---|---|---|
| **Sample #** | **H-Lignin type** | **Lignin (%)** | **pMDI (%)** | **Wax (%)** |
| III-15 | - | 0 | 3.00 | 0.5 |
| III-16 | - | 0 | 2.25 | 0.5 |
| III-17 | Washed | 1.25 | 3.00 | 0 |
| III-18 | Washed | 0.75 | 2.55 | 0.5 |
| III-19 | Washed | 1.26 | 2.25 | 0.5 |
| III-20 | Unwashed | 2.14 | 3.00 | 0 |
| III-21 | Unwashed | 1.29 | 2.55 | 0.5 |
| III-22 | Unwashed | 2.14 | 2.25 | 0.5 |
| III-23 | Unwashed | 1.29 | 2.25 | 0.5 |

**Table 25**

| Physical properties of MDF panels made with pMDI and H-lignin in Experiment 7 | | | | | | | | | | | | |
|---|---|---|---|---|---|---|---|---|---|---|---|---|
| **Sample #** | **H-Lignin type** | **Lignin (%)** | **pMDI (%)** | **Wax (%)** | IB specimens | | Bending specimens | | | Specimens for TS & WA | | |
| | | | | | Density (kg/m³) | IB strength (MPa) | Density (kg/m³) | MOR (MPa) | MOE (MPa) | Density (kg/m³) | TS (%) | WA (%wt.) |
| III-15 | - | 0 | 3.00 | 0.5 | 776±16 | 0.40±0.15 | 780±8 | 29.7±3.2 | 3454±130 | 764±23 | 8.8±0.4 | 19.6±1.5 |
| III-16 | - | 0 | 2.25 | 0.5 | 786±12 | 0.30±0.12 | 784±16 | 28.5±2.4 | 3484±189 | 790±8 | 13.6±3.3 | 24.9±3.8 |
| III-17 | Washed | 1.25 | 3.00 | 0 | 773±12 | 0.71±0.20 | 769±9 | 29.5±2.3 | 3381±154 | 779±24 | 10.4±1.3 | 21.4±1.5 |
| III-18 | Washed | 0.75 | 2.55 | 0.5 | 787±17 | 0.30±0.13 | 783±17 | 29.8±3.7 | 3492±248 | 807±16 | 12.3±1.7 | 21.9±2.4 |
| III-19 | Washed | 1.26 | 2.25 | 0.5 | 798±16 | 0.33±0.11 | 801±26 | 31.1±2.9 | 3733±297 | 827±17 | 10.6±1.3 | 21.4±1.3 |
| III-20 | Unwashed | 2.14 | 3.00 | 0 | 759±20 | 0.61±0.12 | 747±17 | 22.1±2.6 | 2983±224 | 747±11 | 11.3±0.7 | 23.9±0.3 |
| III-21 | Unwashed | 1.29 | 2.55 | 0.5 | 762±14 | 0.47±0.12 | 747±17 | 21.5±2.4 | 2975±175 | 740±16 | 12.0±0.7 | 23.5±1.8 |
| III-22 | Unwashed | 2.14 | 2.25 | 0.5 | 757±13 | 0.53±0.14 | 737±19 | 21.2±3.0 | 2880±232 | 734±14 | 10.0±0.3 | 21.0±1.0 |
| III-23 | Unwashed | 1.29 | 2.25 | 0.5 | 774±8 | 0.52±0.13 | 758±24 | 23.0±2.1 | 3048±175 | 763±20 | 11.6±1.0 | 22.6±2.2 |

Based on the results appearing in Table 25 the following conclusions can be drawn:
a) It is confirmed that Sample No. III-16 for which, the pMDI charge was reduced from 3wt% to 2.25% while maintaining the wax charge at 0.5wt% demonstrated a significant decline in properties such as internal bond strength, TS and WA.
b) It is confirmed that Sample No. III-17 for which washed hydrolysis lignin was added to the wood chips prior to the refiner of the MDF process as a 100% replacement of wax, showed comparable properties to the control with respect to internal bond strength, TS, WA, MOR and MOE.
c) Samples Nos. III-17 to III-19 for which washed hydrolysis lignin was added to the wood chips prior to the refiner of the MDF process, and the pMDI replacement level by lignin did not exceed 25wt% of the total adhesive used in the control experiment (3wt%), show similar MOR, MOE as the control No. III-15 but somewhat inferior but still acceptable performance compared to the control sample No. III-1 with respect to most properties including: TS, WA, and IB.
d) Sample No. III-20 for which unwashed hydrolysis lignin was added to the wood chips prior to the refiner of the MDF process as a 100% replacement of wax, showed good internal bond strength compared to the control but somewhat lower but still acceptable properties compared to the control with respect to TS and WA.

### EXAMPLE IV

### Lignin replacement of wax in MDF production with urea-formaldehyde resin

Urea-formaldehyde (UF) resin was obtained from Hexion. The solids content of the UF resin was 67% by weight.

The wood raw material used was SPF wood chips sourced in Quebec, Canada. The consistency of the wood chips was about 50wt%.

The lignin used was LignoForce^{™} softwood LRC kraft lignin in the form of a fine powder. The solids content of this lignin was about 85%. The lignin was passed through a 60-mesh sieve and a 15-20wt% lignin aqueous dispersion was prepared.

Emulsion wax was used. The pH of the emulsion wax was 8.25-9.25. The solids content was ~58%. The specific gravity was ~1.0.

### Experiment 8. Addition of kraft lignin to the wood chips before the refiner of the MDF manufacturing process

Each batch of SPF wood chips was premixed with a calculated amount of aqueous dispersion of kraft lignin and/or emulsion wax using an OSB rotary blender without the use of the spinning disc. The lignin concentration in the dispersion was 15-20% by weight. The consistency of the mixtures of wood chips and lignin/wax was around 50wt%. The formulations prepared are described in Table 26.

**Table 26**

| Chemical formulations | | | | |
|---|---|---|---|---|
| **Sample** | **Wax (%)** | **Kraft lignin (%)** | **UF (%)** | **Notes** |
| IV-1 | 0.5 | | 10 | Pre-mixed wax with wood chips, and additional water to reach similar moisture content of all formulations |
| IV-2 | 0.25 | | 10 | Pre-mixed wax with wood chips, and additional water to reach similar moisture content of all formulations |
| IV-3 | 0 | | 10 | Pre-mixed wood chips, with additional water to reach similar moisture content of all formulations |
| IV-4 | | 0.65 | 10 | Pre-mixed wood chips, with lignin dispersion to reach similar moisture content of all formulations |
| IV-5 | 0.25 | 0.33 | 10 | Pre-mixed wood chips, with lignin dispersion, wax and additional water to reach similar moisture content of all formulations |

The process used is shown in Fig. 1B, in which lignin/wax was incorporated using a blender. The refining conditions are listed in Table 27. The target dry wood fiber flow was 40 kg/hr. The UF resin was injected via the blowline at the dosage listed in Table 26. The refined and resinated fiber was dried by a flash tube dryer to the target moisture content of about 8wt%. The target moisture content of the fiber was achieved by adjusting the inlet temperature of the dryer.

**Table 27**

| Refining process conditions | |
|---|---|
| **Items** | **Set points** |
| Plug-screw speed | 15 RPM |
| Feed bin speed | 0.9 RPM |
| Digester steam pressure | 8 bar |
| Digester temperature | 175 °C |
| Refiner plate gap | 0.1 mm |
| Retention time | 2.0 min |
| Refiner speed | 2000RPM |
| Flash tube dryer set temperature | 125°C |
| UF resin loading | 10% based on dry fiber weight on Table 29 |

Fiber mats were prepared in the pilot plant, manually. The mats were hot-pressed into ½ " thick MDF panels. The size of the panels was 28" x 28" x 1/2". The press operating conditions are shown in Table 28. The panel density was about 780 kg/m³.

**Table 28**

| Parameters of MDF panel manufacture | | | |
|---|---|---|---|
| **Items** | **Unit** | **Parameters** | **remarks** |
| Panel size | mm | 711 x 711 x 12.7 | |
| Target panel density | kg/m³ | 780 | 48.7lb/ft³ |
| Hot press temperature | °C | 185 | |
| Total press time | sec | 165 | Adjust based on feeling for control |
| Press stand-off | sec | Fast close to 128% of target final thickness | |
| Duration of slow closing to target thickness after stand-off | sec | 100 | |
| Cook time at target thickness | sec | 100 | |
| Degas | sec | 40 | |
| Total | sec | 285 | |
| No. of panels per fibre type | | 3 | |
| Total number of the panels | | 15 | |

All panels were conditioned in a conditioning room at 65% relative humidity at 20°C for at least three weeks for the panels to reach the equilibrium moisture content.

After conditioning, the MDF panels were tested for their mechanical and physical properties in accordance with ASTM D 1037 and ANSI A 208.2. The tests of the panels included average density, internal bond strength (IB), thickness swell (TS) and water absorption (WA) after 24-hour water soaking, MOE/MOR. All results are listed in Table 29.

**Table 29**

| Physical properties of MDF panels made with UF resin and lignin in Experiment 9 | | | | | | | | | | | |
|---|---|---|---|---|---|---|---|---|---|---|---|
| **Sample #** | **Wax (%)** | **Lignin (%)** | **UF (%)** | IB specimens | | Bending specimens | | | Specimens for TS & WA | | |
| | | | | Density (kg/m³) | IB strength (MPa) | Density (kg/m³) | MOR (MPa) | MOE (MPa) | Density (kg/m³) | TS (%) | WA (%wt.) |
| IV-1 | 0.5 | 0 | 10 | 786±13 | 0.79±0.16 | 777±24 | 29.9±4..0 | 2754±291 | 760±31 | 34.6±1.0 | 97.4±5.7 |
| IV-2 | 0.25 | 0 | 10 | 769±12 | 0.63±0.16 | 773±25 | 29.0±3.8 | 2743±248 | 754±20 | 38.7±1.5 | 103.6±3. 9 |
| IV-3 | 0 | 0 | 10 | 773±9 | 0.64±0.19 | 764±17 | 25.9±2.5 | 2650±134 | 762±16 | 42.5±1.6 | 108.6±2. 1 |
| IV-4 | 0 | 0.65 | 10 | 773±10 | 0.83±0.13 | 778±24 | 29.2±4.0 | 2630±238 | 769±16 | 34.4±1.5 | 96.7±3.3 |
| IV-5 | 0.25 | 0.33 | 10 | 773±12 | 0.66±0.17 | 757±23 | 29.1±2.6 | 2718±199 | 773±18 | 38.2±2.7 | 99.2±5.0 |

Based on the results appearing in Table 29 the following conclusions can be drawn:
a) When the wax dosage was reduced from 0.5wt% to 0.25wt% or not added at all , the thickness swelling of the panels increased from 34.6% at 0.5% wax to 38.7% at 0.25% wax, to 42.5% without wax while the water absorption increased from 97.4% at 0.5% wax, to 103.6% at 0.25% wax and further to 108.6% without wax. After considering the standard deviation in the measurements, there were no significant differences in internal bonding strength and bending properties of the various panels at the three wax levels mentioned above.
b) Replacing wax with lignin (sample IV-4) showed comparable thickness swelling (34.6% of TS at 0.5wt% wax vs. 34.4% of TS at 0.65wt% lignin) and water absorption (97.4% of WA at 0.5wt% wax vs. 96.7% of WA at 0.65wt% lignin). The internal bonding and bending properties are also comparable. This indicates that replacing wax with lignin for wood composites is possible..

### EXAMPLE V

### Using lignin to reinforce adhesion in oriented strand board (OSB) manufactured with pMDI binder

pMDI from Huntsman was used which is in the form of a dark brown liquid with a slight aromatic odor. The NCO content was about 30wt%.

Wood raw material used was aspen sourced in Quebec, Canada. The commercial strands were screened to > 1/16 in and dried to about 2% moisture content.

Three types of lignin were used: 1) LignoForce^{™} softwood LRC kraft lignin in the form of a fine powder (which was passed through a 100-mesh sieve) (hereafter referred to as KL) ; 2) unwashed hydrolysis lignin, produced using the TMP-Bio process as described in U.S. patent 9,580,454. The lignin received was in the powder form after being passed through a 60-sieve screen. This lignin was further ground to pass through a 100-mesh sieve (hereafter referred to as UHL); 3) washed hydrolysis lignin, produced using the TMP-Bio process as described in U.S. Patent 9,580,454. The lignin received was in the powder form passing through a 60-sieve screen. The lignin was further ground to pass through a 100-mesh sieve (hereafter referred to as WHL).

Emulsion wax was used. The pH of the emulsion wax was 8.25-9.25. The solids content was ~58%, and the specific gravity was ~1.0.

### Experiment 9. Addition of lignin in powder form by tumbling in with wood strands in OSB manufacture

The OSB manufacturing conditions are presented in Table 30 below.

**Table 30**

| Conditions for OSB manufacture in Experiment 9 | | |
|---|---|---|
| **Items** | **Unit** | **Remarks** |
| Board dimensions | mm | 610 mm x 610mm x 11.1mm(7/16 in) |
| Board construction | | Three-layer sandwich panel (20/60/20) |
| Wood species | | 85% aspen & 15% birch |
| Support | | controlled by software |
| Emulsion wax | % | 1.0 (solids on a dry wood basis) |
| Target mat MC | % | 7% for face layer, 6% for core layer |
| Board target density | kg/m³ | ~625 kg/m³ out of press |
| Press temperature | ^{°}C | 215 (surface of platen) |
| Total press time | Sec | 180 (daylight to daylight) |
| Press closing time | Sec | 20 |
| Degas time | Sec | 30 |
| Replicates | | 3 |

The dried wood strands were placed in a rotational drum blender and the wax, pMDI and water were added through a spin disc during the mixing. The lignin was tumbled in, and mixed with the wood strands in the blender. The formulations are listed in Table 31 below.

**Table 31**

| Formulations used for OSB Manufacture in Experiment 9 | | | | | |
|---|---|---|---|---|---|
| Sample# | Core pMDI (%) | Face pMDI (%) | Lignin type | Lignin in face (%) | Replicates |
| V-1 | 2.2 | 1 | - | - | 3 |
| V-2 | 2.2 | 1 | KL | 1.44 | 3 |
| V-3 | 2.2 | 1 | UHL | 1.44 | 3 |
| V-4 | 2.2 | 1 | WHL | 1.44 | 3 |

The OSB panels were stored at 65% RH (relative humidity) in a chamber to equilibrate the moisture content. After that, the OSB panels were cut to evaluate the following performance parameters: internal bonding strength(IB), flexural properties (MOE, MOR), thickness swelling (TS) and water absorption (WA). The results are shown in Tables 32-33 below.

**Table 32**

| IB, TS & WA of OSB Panels of Experiment 9 | | | | | |
|---|---|---|---|---|---|
| Sample# | Density' (kg/m³) | IB (MPa)¹ | Density² (kg/m³) | TS (%)² | WA (%)² |
| V-1 | 633 | 0.38 | 628 | 28.9 | 43.6 |
| V-2 | 632 | 0.39 | 637 | 21.7 | 34.1 |
| V-3 | 634 | 0.52 | 641 | 18.9 | 34.5 |
| V-4 | 634 | 0.46 | 636 | 23.0 | 38.4 |

| | | | | | |
|---|---|---|---|---|---|
| ¹: average of 24 specimens; 2: average of 9 specimens | | | | | |

**Table 33**

| MOR, MOE of OSB Panels of Experiment 9 | | | | | |
|---|---|---|---|---|---|
| Sample# | Density¹ (kg/m³) | MOR (MPa)¹ | MOE (MPa) | Density² (kg/m³) | MOR wet (%)² |
| V-1 | 665 | 26.78 | 4563 | 647 | 12.03 |
| V-2 | 666 | 28.78 | 4616 | 650 | 12.80 |
| V-3 | 657 | 30.66 | 5106 | 644 | 12.80 |
| V-4 | 665 | 30.12 | 4432 | 652 | 13.12 |

| | | | | | |
|---|---|---|---|---|---|
| ¹: average of 6 specimens; ²: after 2 hours of boiling and testing in the wet state , average of 6 specimens | | | | | |

Based on the results appearing in Tables 32 and 33, the following conclusions can be drawn:
a) Addition of lignin into the formulation improved OSB water resistance by reducing thickness swelling and water absorption. The thickness swelling was reduced by 24.88% for kraft lignin (from 28.94% to 21.74%), by 34.83% for unwashed hydrolysis lignin (from 28.94% to 18.86%) and by 20.59% for washed hydrolysis lignin (from 28.94% to 22.98%). The water absorption was also reduced by 21.7%, 20.9% & 11.9% for kraft lignin, unwashed hydrolysis lignin and washed hydrolysis lignin, respectively.
b) The flexural properties of OSB at dry conditions improved with lignin addition: 7.4% improvement of MOR with kraft lignin, 14.5% improvement of MOR with unwashed hydrolysis lignin and 12.5% improvement of MOR with washed hydrolysis lignin.
c) The flexural strength of OSB with lignin after two hours of boiling was slightly higher than the control panels
d) The internal bond strength of OSB with lignin was the same or better as compared to the control.

### Experiment 10. Partial replacement of pMDI with hydrolysis lignin in powder form in OSB manufacture

In this experiment, the raw materials used were similar to those of Experiment 9, except that the unwashed hydrolysis lignin and the washed hydrolysis lignin were passed through a 200-mesh sieve before application. Lignin was only applied in the face layers of sandwich OSB panels, not in the core layer such OSB panels. The OSB manufacturing conditions are illustrated in Table 34

**Table 34**

| Conditions used for OSB manufacture in Experiment 10 | | |
|---|---|---|
| **Items** | **Unit** | **Remarks** |
| Board dimensions | Mm | 610 mm x 610mm x 11.1mm(7/16 in) |
| Board construction | | Three-layer sandwich panel (20/60/20) |
| Wood species | | 85% aspen & 15% birch |
| Support | | control by software |
| Emulsion wax | % | 1.0 (solids on a dry wood basis) |
| Target mat MC | % | 6.5% for face layer, 4% for core layer |
| Board target density | kg/m³ | ~625 kg/m³ out of press |
| Press temperature | ^{°}C | 215 (surface of platen) |
| Total press time | Sec | 180 (daylight to daylight) |
| Press closing time | Sec | 20 |
| Degas time | Sec | 30 |
| Replicates | | 3 |

The formulations are illustrated in Table 35 below.

**Table 35**

| Formulations used for OSB Manufacture in Experiment 10 | | | | | |
|---|---|---|---|---|---|
| Sample# | Core pMDI (%) | Face pMDI (%) | Lignin type | Lignin in face (%)¹ | replicates |
| V-5 | 2.4 | 2.4 | - | | 3 |
| V-6 | 2.4 | 1.80 | - | | 3 |
| V-7 | 2.4 | 2.04 | WHL | 0.72 | 3 |
| V-8 | 2.4 | 1.80 | WHL | 1.20 | 3 |
| V-9 | 2.4 | 2.04 | UHL | 1.23 | 3 |
| V-10 | 2.4 | 1.80 | UHL | 2.06 | 3 |

| | | | | | |
|---|---|---|---|---|---|
| ¹: weight is based on oven dry weight. The actual lignin weight was adjusted on the basis of the moisture content contained in the lignin. | | | | | |

The OSB panels were cut and tested before reaching equilibrium moisture content. The moisture contents were measured during testing, the specimens were stored in a 65% RH chamber to equilibrate the moisture content before evaluation. The internal bond strength (IB), thickness swelling (TS) and water absorption are listed in Table 36. The flexural properties (MOE and MOR) and D4 bending capacities are illustrated in Table 37.

**Table 36**

| IB, TS & WA of OSB Panels of Experiment 10 | | | | | | |
|---|---|---|---|---|---|---|
| Sample# | Moisture content (%) | Density¹ (kg/m³) | IB (MPa)¹ | Density² (kg/m³) | TS (%)² | WA (%)² |
| V-5 | 2.0 | 620 | 0.34 | 598 | 14.2 | 32.6 |
| V-6 | 2.1 | 624 | 0.31 | 596 | 16.7 | 34.3 |
| V-7 | 2.0 | 627 | 0.33 | 600 | 15.1 | 34.1 |
| V-8 | 2.3 | 625 | 0.36 | 575 | 14.0 | 33.6 |
| V-9 | 2.2 | 628 | 0.34 | 593 | 14.6 | 32.8 |
| V-10 | 2.3 | 631 | 0.41 | 575 | 13.5 | 33.4 |

| | | | | | | |
|---|---|---|---|---|---|---|
| ¹: average of 9 specimens; ²: average of 9 specimens | | | | | | |

**Table 37**

| MOR & MOE of OSB Panels of Experiment 10 | | | | | | |
|---|---|---|---|---|---|---|
| Sample# | Moisture content (%) | Density¹ (kg/m³) | D4 bending capacity (N·mm/mm)¹ | Density² (kg/m³) | MOR (%)² | MOE (%)² |
| V-5 | 4.9 | 663 | 754 | 642 | 30.8 | 4330 |
| V-6 | 4.6 | 652 | 624 | 669 | 31.6 | 4826 |
| V-7 | 3.7 | 642 | 763 | 622 | 28.7 | 4117 |
| V-8 | 3.1 | 649 | 776 | 661 | 31.8 | 4466 |
| V-9 | 3.9 | 639 | 724 | 631 | 30.5 | 4366 |
| V-10 | 4.9 | 662 | 760 | 670 | 32.1 | 4512 |

| | | | | | | |
|---|---|---|---|---|---|---|
| ¹: average of 9 specimens; ²: average of 9 specimens | | | | | | |

The results in Tables 36 and 37 show that unwashed hydrolysis lignin and washed hydrolysis lignin can partially replace pMDI in the face layer of OSB without negatively affecting the physical properties of the OSB panels.

### Experiment 11. Partial replacement of pMDI with unwashed hydrolysis lignin in powder form in OSB manufacture

Commercial dry aspen strands (screened by ¼ in sieve) were used in this experiment. The unwashed lignin was passed through a 200-mesh sieve. The OSB manufacturing conditions are illustrated in Table 38 below.

**Table 38**

| Conditions used for OSB manufacture in Experiment 11 | | |
|---|---|---|
| **Items** | **Unit** | **Remarks** |
| Board dimensions | mm | 862mm x 862 mm x 11 mm |
| Board construction | | Three layer sandwich panel (25/50/25) |
| Wood species | | Aspen (screened by ¼" sieve) |
| Support | | control by software |
| Board target density | kg/m³ | 640 kg/m³ (out of press) |
| Press temperature | ^{°}C | 215 (surface of platen) |
| Total press time | Sec | 145 |
| pMDI loading in core layer | % | 1.70 |
| Wax loading in core and face layer | % | 1.00 |

The dried wood strands were placed in a rotational drum blender. The order of addition of materials to the blender was as follows: emulsion wax, water, pMDI binder and unwashed H-lignin powder. The formulations used are listed in Table 39 below.

**Table 39**

| Formulations Used for OSB Manufacture in Experiment 11 | | | | | |
|---|---|---|---|---|---|
| Sample# | Core pMDI (%) | Face pMDI (%) | Lignin in face (%)¹ | Replicates | notes |
| V-11 | 1.70 | 2.10 | - | 10 | Ctrl 1 |
| V-12 | 1.70 | 1.58 | - | 10 | Ctrl 2 |
| V-13 | 1.70 | 1.58 | 0.78 | 10 | 25% pMDI replacement by 1.5 time of lignin |
| V-14 | 1.70 | 1.58 | 1.35 | 10 | 25% pMDI replacement by 2.6 times of lignin |

| | | | | | |
|---|---|---|---|---|---|
| ¹: weight is based on oven dry weight. The actual lignin weight was adjusted based on the moisture content contained in the lignin. | | | | | |

Tables 42 and 43 show the results obtained after manufacturing OSB under the conditions shown in Table 38 and after using the formulations shown in Table 39. The properties tested included: internal bond strength (IB), flexural properties (MOE & MOR), thickness swelling (TS) & water absorption (WA), stiffness capacity (EI) and maximum bending moment (MM). The stiffness capacity and maximum bending moment were determined according to APA PS 2 entitled: "Performance Standard For Wood Structural-Use Panels", Two sets of specimens were tested for EI & MM: 1) under dry conditions after a few weeks in 65% RH chamber to equilibrate the moisture content, and 2) following one moisture cycle (also called single cycle). The one moisture cycle procedure is as follows: 1) the specimens are placed in racks to ensure free movement of water and air around the specimens, 2) the specimens are then placed in a vacuum-pressure vessel which is then filled with 66°C water, 3) a vacuum of 50.6 kPa is drawn on the vessel for 30 min, 4) the vacuum is then released and the specimens are allowed to be soaked in the water at atmospheric pressure for 30 min, 5) the vessel is then drained and the specimens dried for at least 15 hours at 82°C in an oven with fan-forced air circulation at 45 to 50 air changes per minute until reaching initial mass, and then 6) the specimens are tested dry according to the appropriate test method.

For OSB dry bending and stiffness both along and across the panel strength axis samples were evaluated in accordance to with a method based on the principles of ASTM D-3043 Method D. Specimen dimensions: 115mm width, 510mm length. The quality assurance value for 7/16-inch OSB panels is listed in Table 40.

**Table 40**

| Reference for Quality Assurance value for 7/16 in PS 2 | | | | |
|---|---|---|---|---|
| End Use - Span Rating or performance category | Bending Stiffness, EI x 10³ | | Bending Strength, MM | |
| | Stress applied parallel to Strength Axis (N·mm²/mm) | Stress applied perpendicular to Strength Axis (N·mm²/mm) | Stress applied parallel to Strength Axis (N·mm/mm) | Stress applied perpendicular to Strength Axis (N·mm/mm) |
| Sheating Roof -24 / Subfloor - 16 | 395 | 94 | 390 | 140 |
| Structural 1 7/16 | 395 | 141 | 390 | 220 |

Based on APA PS2, panels must meet the performance requirement of bond classification for properties that affect the adhesive bonding system when tested in accordance with the referenced test method. Exposure 1 OSB - OSB panels rated as Exposure 1 must meet or exceed the criteria in Table 41 below when tested in accordance with method based on the principles of ASTM D-3043 Method D following moisture cycling (single cycle) along strength axis.

**Table 41**

| Exposure 1 criteria for OSB tested along strength axis according to section 7.6, cycled according to section 7.16 in PS2 | | |
|---|---|---|
| Performance Category | End Use - Span Rating | Bending Capacity (Required Moment) (N·mm/mm) |
| 7/16 | Roof -24 / Subfloor - 16 | 350 |

**Table 42**

| IB, TS, WA, MOE & MOR of OSB Results of Experiment 11 | | | | | | | | |
|---|---|---|---|---|---|---|---|---|
| Code | pMDI (%) | Lignin (%) | Density (kg/m³) | IB (MPa) | TS (%) | WA (%) | MOE (MPa) | MOR (MPa) |
| V-11 | 2.10 | - | 647 | 0.28 | 14.8 | 26.3 | 3766 | 28.4 |
| V-12 | 1.58 | - | 647 | 0.28 | 17.6 | 29.6 | 3825 | 27.1 |
| V-13 | 1.58 | 0.78 | 642 | 0.28 | 19.3 | 33.0 | 3757 | 26.8 |
| V-14 | 1.58 | 1.35 | 649 | 0.28 | 17.8 | 31.5 | 3894 | 29.3 |

**Table 43**

| MM & El of OSB results of Experiment 11 | | | | | | | |
|---|---|---|---|---|---|---|---|
| Code | pMDI (%) | Lignin (%) | Density (kg/m³) | MM (dry) (N·mm/mm) | EIx10³(dry) (N·mm²/mm) | MM (single cycle) (N·mm/mm) | EIx10³(single cycle) (N·mm²/mm) |
| V-11 | 2.10 | - | 647 | 681.3 | 515 | 490 | 430 |
| V-12 | 1.58 | - | 647 | 663.6 | 513 | 423 | 392 |
| V-13 | 1.58 | 0.78 | 642 | 652.2 | 515 | 453 | 402 |
| V-14 | 1.58 | 1.35 | 649 | 709.9 | 535 | 503 | 452 |

Based on the results appearing in Tables 42 and 43, the following conclusions can be drawn:
a) The OSB panels made with pMDI and suitable amounts of unwashed hydrolysis lignin in the face layer have similar or better flexural properties compared to the control OSB panels made without lignin (MOE: 3894 MPa with lignin vs. 3766 MPa without lignin; MOR: 29.3 MPa with lignin vs. 28.4 without lignin)
b) The OSB panels made with pMDI and suitable amounts of unwashed hydrolysis lignin in the face layer have similar or better maximum moment under dry conditions and after a single cycle compared to the control panels made without lignin (MM under dry conditions: 709.9 N·mm/mm with lignin vs. 681.3 N·mm/mm without lignin; MM after a single cycle: 503 N·mm/mm with lignin vs. 490 N·mm/mm without lignin
c) The OSB panels made with pMDI and suitable amounts of unwashed hydrolysis lignin in the face layer have similar or better stiffness capacity (EI) under dry conditions and after a single cycle compared to the control panels made without lignin (EI under dry conditions: 535 N·mm²/mm with lignin vs. 515 N·mm²/mm without lignin; El after a single cycle: 452 N·mm²/mm with lignin vs. 430 N·mm²/mm without lignin)

### EXAMPLE VI

### Partial replacement of pMDI with lignin in medium density fiberboard (MDF) production

In this experiment, pMDI from Huntsman was used which was in the form of a dark brown liquid with a slight aromatic odor. The NCO content was about 30wt%.

The commercial wood chips mixtures of 50% spruce and 50% pine used were sourced in Alberta, Canada. A deck screener with 25.4 mm and 1.6 mm screen hole sizes was used to screen the wood chips.

Three lignin were used: 1) LignoForce^{™} softwood Low Residual Content (LRC) kraft lignin in the form of a fine powder (which was passed through a 200-mesh sieve) (hereafter referred to as KL); 2) unwashed hydrolysis lignin, produced using the TMP-Bio process as described in U.S. Patent 9,580,454. The lignin received was in the powder form after being passed through a 60-sieve screen. This lignin was further ground to pass through a 200-mesh sieve (hereafter referred to as UHL); 3) washed hydrolysis lignin, produced using the TMP-Bio process as described in U.S. Patent 9,580,454. The lignin received was in the powder form after being passed through a 60-sieve screen. This lignin was further ground to pass through a 200-mesh sieve. Each of the three lignins (KL, UHL, WHL) was mixed separately with water to make a 15wt% solids dispersion that was applied to the wood chips in a drum blender using a spinning disk atomizer at 8000 rpm which was used to deliver the required amount of lignin based on the weight of the wood chips (oven dried weight).

### Experiment 12. Partial replacement of pMDI with unwashed hydrolysis lignin, washed hydrolysis lignin and kraft lignin for MDF manufacture

Each lignin type was added to wood chips at application rates of 0.60wt% and 1.05wt%. A control group of wood chips was also prepared with no lignin applied. The target moisture content in all cases was 25%.

Each group of prepared wood chips was processed separately into MDF fibre utilizing Pallmann PR32 refiner (pressurized refiner system) at a pressure digester setting of 8.0 bar for 1.5 minutes. The fibre produced was dried through a flash tube dryer. Each fiber type was placed in a separate dryer box for approximately 24 hours to air dry and balance moisture content to ~6.0%. The formulations used for making MDF panels is shown in Table 44.

**Table 44**

| Formulations used for MDF manufacture in Experiment 12 | | | | | |
|---|---|---|---|---|---|
| Sample# | pMDI (%) | Lignin type | Lignin (%)¹ | Replicates | notes |
| VI-1 | 2.80 | - | - | 3 | Ctrl 1 |
| VI-2 | 2.40 | - | - | 3 | Ctrl 2 |
| VI-3 | 2.10 | - | - | 3 | Ctrl 3 |
| VI-4 | 2.40 | UHL | 0.60 | 3 | UHL1 |
| VI-5 | 2.40 | WHL | 0.60 | 3 | WHL1 |
| VI-6 | 2.40 | KL | 0.60 | 3 | KL1 |
| VI-7 | 2.10 | UHL | 1.05 | 3 | UHL2 |
| VI-8 | 2.10 | WHL | 1.05 | 3 | WHL2 |
| VI-9 | 2.10 | KL | 1.05 | 3 | KL2 |

| | | | | | |
|---|---|---|---|---|---|
| ¹: Lignin was incorporated with fiber during refining process | | | | | |

The commercial pMDI binder was applied at the application rate indicated in Table 42 with a spinning disk atomizer rotating at 12000 rpm. Blending of all materials was done in a rotational drum blender with a fibre mixing fan installed to recirculate the MDF fibre as the pMDI was applied. Addition rates were based on the oven dry weight of the MDF fibre and the solids content of all components. After drum blending was completed, the blended MDF fibre was put through a secondary mixing system.

Each group of blended materials was manually formed into homogeneous mats (762 mm by 762 mm). Mats were formed on a teflon sheet with an additional Teflon sheet placed on the top surface. During forming, the mats were manually prepressed at half and final weight to reduce potential slough off. The panel manufacture parameters are illustrated in Table 45 below.

**Table 45**

| Conditions for MDF manufacture in Experiment 12 | | |
|---|---|---|
| **Items** | **Unit** | **Remarks** |
| Board dimensions | mm | 762 mm x 762 mm x 8 mm |
| Board construction | | Homogenous |
| Wood species | | 50% spruce & 50% pine |
| Support | | control by software |
| Board target density | kg/m³ | 48 ib/ft³ (769kg/m³)(out of press) |
| Press temperature | ^{°}C | 210 (surface of platen) |
| Total press time | Sec | 145 |
| Cook time | sec | 35 |

The MDF panels were cut to specimens for measurement of internal bond strength (IB), thickness swelling (TS) and water absorption (WA), two sets of specimens were prepared for the measurement of flexural properties (MOE & MOE), and conditioned in a 65% RH chamber. About ~0.5 mm of each side of the face layer of IB specimens were sanded before testing. The testing results of MDF specimens are listed in Tables 46 and 47. The properties were adjusted to a density of 775 kg/m³.

**Table 46**

| MOR & MOE of MDF Panels of Experiment 12 | | | | | | |
|---|---|---|---|---|---|---|
| Sample# | pMDI (%) | Lignin type | Lignin (%) | MOR (MPa) | MOE (MPa) | MOR (wet)¹ (MPa) |
| VI-1 | 2.80 | - | - | 27.8 | 2949 | 8.7 |
| VI-2 | 2.40 | - | - | 24.6 | 2791 | 7.6 |
| VI-4 | 2.40 | UHL | 0.60 | 28.2 | 3180 | 8.0 |
| VI-5 | 2.40 | WHL | 0.60 | 27.3 | 3046 | 7.5 |
| VI-6 | 2.40 | KL | 0.60 | 28.2 | 3097 | 7.8 |
| VI-3 | 2.10 | - | - | 23.1 | 2746 | 6.9 |
| VI-7 | 2.10 | UHL | 1.05 | 27.3 | 3166 | 7.6 |
| VI-8 | 2.10 | WHL | 1.05 | 28.2 | 3145 | 8.1 |
| VI-9 | 2.10 | KL | 1.05 | 23.8 | 2941 | 7.1 |

| | | | | | | |
|---|---|---|---|---|---|---|
| ¹: after 2 hour boiling and testing in wet form | | | | | | |

**Table 47**

| TS, WA & IB of MDF Panels of Experiment 12 | | | | | | |
|---|---|---|---|---|---|---|
| Sample# | pMDI (%) | Lignin type | Lignin (%) | TS (%) | WA (%) | IB (MPa) |
| VI-1 | 2.80 | - | - | 12.0 | 22.1 | 0.93 |
| VI-2 | 2.40 | - | - | 12.9 | 21.3 | 0.82 |
| VI-4 | 2.40 | UHL | 0.60 | 13.7 | 25.8 | 0.88 |
| VI-5 | 2.40 | WHL | 0.60 | 13.8 | 26.9 | 0.94 |
| VI-6 | 2.40 | KL | 0.60 | 12.9 | 25.9 | 0.83 |
| VI-3 | 2.10 | - | - | 14.9 | 26.6 | 0.71 |
| VI-7 | 2.10 | UHL | 1.05 | 15.1 | 29.4 | 0.67 |
| VI-8 | 2.10 | WHL | 1.05 | 14.4 | 33.9 | 0.83 |
| VI-9 | 2.10 | KL | 1.05 | 14.1 | 31.6 | 0.63 |

Based on the results appearing in Tables 46 and 47, the following conclusions can be drawn:
a) The three lignins used (UHL, WHL & KL) contributed to adhesion in the MDF panels.
b) MDF panels made at 15wt% and 25wt% pMDI replacement by UHL, WHL and KL had similar MOR as control MDF panels made at a 2.8wt% charge of pMDI (based on oven dry wood weight); MDF panels made at 15wt% and 25wt% pMDI replacement by UHL, WHL and KL had higher MOE than the control MDF panel made at a charge of 2.4wt% or 2.1wt% of pMDI, respectively.
c) MDF panels made at 15wt% pMDI replacement by UHL, WHL and KL had comparable TS & WA as the control MDF panels made with at 2.8wt% or 2.4% pMDI.

While this disclosure has been described in connection with specific embodiments thereof, it will be understood that it is capable of further modifications and this application is intended to cover any variations, uses, or adaptations which fall within the scope of the appended claims.

## Claims

1. A process of manufacturing a fiberboard comprising:
a) blending a wood material with lignin prior to
b) flowing the wood material-lignin mixture into a digester compressing the wood material-lignin mixture; cooking the compressed wood material-lignin mixture by injection of pressure steam having a temperature between 130-190°C; refining the compressed wood material-lignin mixture to produce refined fibers,
c) blending the refined fibers with isocyanate and partial or no wax producing a resinated material;
d) forming a mat from said resinated material; and
e) compressing or molding said mat producing a fiberboard at elevated temperature.

2. The process of claim 1, wherein the wood material and lignin are first blended in a blender producing a wood material-lignin mixture; said wood material-lignin mixture flowed into a digester compressing said wood material-lignin mixture; cooking said compressed wood material-lignin mixture by injection of pressure steam; refining said compressed wood material-lignin mixture producing refined fibers; and blending said refined fibers with isocyanate and partial or no wax producing the resinated material.

3. The process of claim 1, comprising incorporating the lignin to said wood material through a plug-screw producing a wood material-lignin mixture; said wood material-lignin mixture flowed into a digester compressing said wood material-lignin mixture; cooking said compressed wood material-lignin mixture by injection of pressure steam; refining said compressed wood material-lignin mixture producing refined fibers; and blending said refined fibers with isocyanate and partial or no wax producing the resinated material.

4. The process of claim 1, wherein the wood material is flown through a plug-screw compressing said wood material; said compressed wood material flowed into a digester wherein the lignin is incorporated producing a compressed wood material-lignin mixture; cooking said compressed wood material-lignin mixture by injection of pressure steam; refining said compressed wood material-lignin mixture producing refined fibers; and blending said refined fibers with isocyanate and partial or no wax producing the resinated material.

5. The process of claim 1, wherein the wood material is flown through a plug-screw compressing said wood material; said compressed wood material flowed into a digester; cooking said compressed wood material by injection of pressure steam; incorporating the lignin to said compressed wood material producing a compressed wood material-lignin mixture; refining said compressed wood material-lignin mixture producing refined fibers; and blending said refined fibers with isocyanate and partial or no wax producing the resinated material.

6. The process of claim 1, wherein the wood material is flown through a plug-screw compressing said wood material; said compressed wood material flowed into a digester; cooking said compressed wood material by injection of pressure steam; refining said compressed wood material producing refined fibers; incorporating the lignin to said refined fibers through a blow-line producing a refined fibers-lignin mixture, blending said refined fibers-lignin mixture with isocyanate and partial or no wax producing the resinated material.

7. The process of claim 1, wherein the wood material is flown through a plug-screw compressing said wood material; said compressed wood material flowed into a digester; cooking said compressed wood material by injection of pressure steam; refining said compressed wood material producing refined fibers; blending said refined fibers to the isocyanate and partial or no wax producing a mixture of refined fibers-isocyanate; drying said mixture of refined fibers-isocyanate; and blending lignin to said mixture of refined fibers-isocyanate producing the resinated material.

8. The process of any one of claims 2-7, wherein the pressure steam is at a temperature between 130-190_{°}C.

9. The process of any one of claims 2-8, wherein wood material is wood chips or wood sawdust and said fiberboard is an insulation board.

10. The process of any one of claims 1-9, wherein the lignin is in a powder form or in suspension; preferably the lignin is kraft lignin, soda lignin, hydrolysis lignin, lignosulfonate, organosolv lignin, dioxane acidolysis lignin, milled-wood lignin, or klason lignin.

## Patentansprüche

1. Verfahren zur Herstellung einer Faserplatte, umfassend:
a) Mischen eines Holzmaterials mit Lignin vor
b) Einleiten des Holzmaterial-Lignin-Gemischs in einen Kocher zum Komprimieren des Holzmaterial-Lignin-Gemischs; Kochen des komprimierten Holzmaterial-Lignin-Gemischs durch Einspritzen von Druckdampf mit einer Temperatur zwischen 130 und 190 °C;
Raffinieren des Komprimat-Lignin-Gemischs, um raffinierte Fasern herzustellen,
c) Mischen der raffinierten Fasern mit Isocyanat und teilweisem oder keinem Wachs, wodurch ein harzhaltiges Material hergestellt wird;
d) Bilden einer Matte aus dem harzhaltigen Material; und
e) Komprimieren oder Formen der Matte, wodurch eine Faserplatte bei erhöhter Temperatur hergestellt wird.

2. Verfahren nach Anspruch 1, wobei das Holzmaterial und das Lignin zunächst in einem Mischer vermischt werden, wodurch ein Holzmaterial-Lignin-Gemisch hergestellt wird; das Holzmaterial-Lignin-Gemisch in einen Kocher geleitet wird, wodurch das Holzmaterial-Lignin-Gemisch komprimiert wird; das komprimierte Holzmaterial-Lignin-Gemisch durch Einspritzen von Druckdampf gekocht wird; das komprimierte Holzmaterial-Lignin-Gemisch raffiniert wird, wodurch raffinierte Fasern hergestellt werden; und die raffinierten Fasern mit Isocyanat und teilweisem oder keinem Wachs gemischt werden, wodurch das harzhaltige Material hergestellt wird.

3. Verfahren nach Anspruch 1, umfassend das Einbringen des Lignins in das Holzmaterial durch eine Stopfschnecke, wodurch ein Holzmaterial-Lignin-Gemisch hergestellt wird; das Einleiten des Holzmaterial-Lignin-Gemisches in einen Kocher, wodurch das Holzmaterial-Lignin-Gemisch komprimiert wird; das Kochen des komprimierten Holzmaterial-Lignin-Gemischs durch Einspritzen von Druckdampf; das Raffinieren des komprimierten Holzmaterial-Lignin-Gemischs, wodurch raffinierte Fasern hergestellt werden; und das Mischen der raffinierten Fasern mit Isocyanat und teilweisem oder keinem Wachs, wodurch das harzhaltige Material hergestellt wird.

4. Verfahren nach Anspruch 1, wobei das Holzmaterial durch eine Stopfschnecke, die das Holzmaterial komprimiert, eingeleitet wird; das komprimierte Holzmaterial in einen Kocher eingeleitet wird, in dem das Lignin eingebunden wird, wodurch ein komprimiertes Holzmaterial-Lignin-Gemisch hergestellt wird; das komprimierte Holzmaterial-Lignin-Gemisch durch Einspritzen von Druckdampf gekocht wird; das komprimierte Holzmaterial-Lignin-Gemisch raffiniert wird, wodurch raffinierte Fasern hergestellt werden; und die raffinierten Fasern mit Isocyanat und teilweisem oder keinem Wachs gemischt werden, wodurch das harzhaltige Material hergestellt wird.

5. Verfahren nach Anspruch 1, wobei das Holzmaterial durch eine Stopfschnecke, die das Holzmaterial komprimiert, eingeleitet wird; das komprimierte Holzmaterial in einen Kocher eingeleitet wird; das komprimierte Holzmaterial durch Einspritzen von Druckdampf gekocht wird; das Lignin in das komprimierte Holzmaterial eingebracht wird, wodurch ein komprimiertes Holzmaterial-Lignin-Gemisch hergestellt wird; das komprimierte Holzmaterial-Lignin-Gemisch raffiniert wird, wodurch raffinierte Fasern hergestellt werden; und die raffinierten Fasern mit Isocyanat und teilweisem oder keinem Wachs gemischt werden, wodurch das harzhaltige Material hergestellt wird.

6. Verfahren nach Anspruch 1, wobei das Holzmaterial durch eine Stopfschnecke, die das Holzmaterial komprimiert, eingeleitet wird; das komprimierte Holzmaterial in einen Kocher eingeleitet wird; das komprimierte Holzmaterial durch Einspritzen von Druckdampf gekocht wird; das komprimierte Holzmaterial raffiniert wird, wodurch raffinierte Fasern hergestellt werden; das Lignin in die raffinierten Fasern über eine Blasleitung eingebracht wird, wodurch ein raffiniertes Faser-Lignin-Gemisch hergestellt wird, das raffinierte Faser-Lignin-Gemisch mit Isocyanat und teilweisem oder keinem Wachs gemischt werden, wodurch das harzhaltige Material hergestellt wird.

7. Verfahren nach Anspruch 1, wobei das Holzmaterial durch eine Stopfschnecke, die das Holzmaterial komprimiert, eingeleitet wird; das komprimierte Holzmaterial in einen Kocher eingeleitet wird; das komprimierte Holzmaterial durch Einspritzen von Druckdampf gekocht wird; das komprimierte Holzmaterial raffiniert wird; die raffinierten Fasern mit Isocyanat und teilweisem oder keinem Wachs gemischt werden, wodurch ein Gemisch aus raffinierten Fasern und Isocyanat hergestellt wird; das Gemisch aus raffinierten Fasern und Isocyanat getrocknet wird; und das Lignin mit dem Gemisch aus raffinierten Fasern und Isocyanat vermischt wird, wodurch das harzhaltige Material hergestellt wird.

8. Verfahren nach einem der Ansprüche 2 bis 7, wobei der Druckdampf eine Temperatur zwischen 130 und 190 °C aufweist.

9. Verfahren nach einem der Ansprüche 2 bis 8, wobei es sich bei dem Holzmaterial um Holzspäne oder Holzsägemehl handelt und die Faserplatte eine Dämmplatte ist.

10. Verfahren nach einem der Ansprüche 1 bis 9, wobei das Lignin in Pulverform oder in Suspension vorliegt; vorzugsweise ist das Lignin Kraft-Lignin, Soda-Lignin, Hydrolyse-Lignin, Lignosulfonat, Organosolv-Lignin, Dioxan-Acidolyse-Lignin, Lignin aus gemahlenem Holz oder Klason-Lignin.

## Revendications

1. Procédé de fabrication d'un panneau de fibres, comprenant :
a) le mélange d'un matériau de bois avec de la lignine avant
b) l'acheminement du mélange de matériau de bois-lignine dans un digesteur afin de comprimer le mélange de matériau de bois-lignine ; la cuisson du mélange de matériau de bois-lignine comprimé par injection de vapeur sous pression ayant une température comprise entre 130 et 190°C ; le raffinage du mélange de matériau de bois-lignine comprimé pour produire des fibres raffinées,
c) le mélange des fibres raffinées avec de l'isocyanate et une quantité partielle ou nulle de cire afin de produire un matériau résiné ;
d) la formation d'un matelas à partir dudit matériau résiné ; et
e) la compression ou le moulage dudit matelas afin de produire un panneau de fibres à température élevée.

2. Procédé selon la revendication 1, dans lequel le matériau de bois et la lignine sont d'abord mélangés dans un mélangeur afin de produire un mélange de matériau de bois-lignine ; ledit mélange de matériau de bois-lignine étant acheminé dans un digesteur afin de comprimer ledit mélange de matériau de bois-lignine ; la cuisson dudit mélange de matériau de bois-lignine comprimé par injection de vapeur sous pression ; le raffinage dudit mélange de matériau de bois-lignine comprimé afin de produire des fibres raffinées ; et le mélange desdites fibres raffinées avec de l'isocyanate et une quantité partielle ou nulle de cire afin de produire le matériau résiné.

3. Procédé selon la revendication 1, comprenant l'incorporation de la lignine dans ledit matériau de bois à travers une vis-bouchon afin de produire un mélange de matériau de bois-lignine ; ledit mélange de matériau de bois-lignine étant acheminé dans un digesteur afin de comprimer ledit mélange de matériau de bois-lignine ; la cuisson dudit mélange de matériau de bois-lignine comprimé par injection de vapeur sous pression ; le raffinage dudit mélange de matériau de bois-lignine comprimé afin de produire des fibres raffinées ; et le mélange desdites fibres raffinées avec de l'isocyanate et une quantité partielle ou nulle de cire afin de produire le matériau résiné.

4. Procédé selon la revendication 1, dans lequel le matériau de bois est acheminé à travers une vis-bouchon afin de comprimer ledit matériau de bois ; ledit matériau de bois comprimé étant acheminé dans un digesteur dans lequel la lignine est incorporée afin de produire un mélange de matériau de bois-lignine comprimé ; la cuisson dudit mélange de matériau de bois-lignine comprimé par injection de vapeur sous pression ; le raffinage dudit mélange de matériau de bois-lignine comprimé afin de produire des fibres raffinées ; et le mélange desdites fibres raffinées avec de l'isocyanate et une quantité partielle ou nulle de cire afin de produire le matériau résiné.

5. Procédé selon la revendication 1, dans lequel le matériau de bois est acheminé à travers une vis-bouchon afin de comprimer ledit matériau de bois ; ledit matériau de bois comprimé étant acheminé dans un digesteur ; la cuisson dudit matériau de bois comprimé par injection de vapeur sous pression ; l'incorporation de la lignine dans ledit matériau de bois comprimé afin de produire un mélange de matériau de bois-lignine comprimé ; le raffinage dudit mélange de matériau de bois-lignine comprimé afin de produire des fibres raffinées ; et le mélange desdites fibres raffinées avec de l'isocyanate et une quantité partielle ou nulle de cire afin de produire le matériau résiné.

6. Procédé selon la revendication 1, dans lequel le matériau de bois est acheminé à travers une vis-bouchon afin de comprimer ledit matériau de bois ; ledit matériau de bois comprimé étant acheminé dans un digesteur ; la cuisson dudit matériau de bois comprimé par injection de vapeur sous pression ; le raffinage dudit matériau de bois comprimé afin de produire des fibres raffinées ; l'incorporation de la lignine dans lesdites fibres raffinées à travers une conduite de soufflage afin de produire un mélange de fibres raffinées-lignine, le mélange dudit mélange de fibres raffinées-lignine avec de l'isocyanate et une quantité partielle ou nulle de cire afin de produire le matériau résiné.

7. Procédé selon la revendication 1, dans lequel le matériau de bois est acheminé à travers une vis-bouchon afin de comprimer ledit matériau de bois ; ledit matériau de bois comprimé étant acheminé dans un digesteur ; la cuisson dudit matériau de bois comprimé par injection de vapeur sous pression ; le raffinage dudit matériau de bois comprimé afin de produire des fibres raffinées ; le mélange desdites fibres raffinées avec de l'isocyanate et une quantité partielle ou nulle de cire afin de produire un mélange de fibres raffinées-isocyanate ; le séchage dudit mélange de fibres raffinées-isocyanate ; et le mélange de la lignine avec ledit mélange de fibres raffinées-isocyanate afin de produire le matériau résiné.

8. Procédé selon l'une quelconque des revendications 2 à 7, dans lequel la vapeur sous pression est à une température comprise entre 130 et 190°C.

9. Procédé selon l'une quelconque des revendications 2 à 8, dans lequel le matériau de bois est constitué de copeaux de bois ou de sciure de bois et ledit panneau de fibres est un panneau isolant.

10. Procédé selon l'une quelconque des revendications 1 à 9, dans lequel la lignine se présente sous forme de poudre ou en suspension ; de préférence, la lignine est une lignine kraft, une lignine de soude, une lignine d'hydrolyse, un lignosulfonate, une lignine organosolv, une lignine d'acidolyse au dioxane, une lignine de bois broyé ou une lignine de klason.
